(19) Europäisches Patentamt
European Patent Office
Office européen des brevets

(11) **EP 1 117 203 B1**

(12) # FASCICULE DE BREVET EUROPEEN

(45) Date de publication et mention de la délivrance du brevet:
**12.09.2001 Bulletin 2001/37**

(51) Int Cl.7: **H04J 13/02**, H04L 1/00

(21) Numéro de dépôt: **01400088.9**

(22) Date de dépôt: **12.01.2001**

(54) **Emission et réception de symboles d'information sur des canaux multiplexés**

Übertragung und Empfang von Informationssymbolen in multiplexierten Kanälen

Transmission and reception of information symbols in multiplexed channels

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **14.01.2000 FR 0000494**

(43) Date de publication de la demande:
**18.07.2001 Bulletin 2001/29**

(73) Titulaire: **Nortel Networks S.A.**
**Guyancourt, 78928 Yvelines Cedex (FR)**

(72) Inventeurs:
- **Le Strat, Evelyne**
  **75015 Paris (FR)**
- **Leretaille, Catherine**
  **75015 Paris (FR)**
- **Gosne, Stéphane**
  **92130 Issy-Les-Moulineaux (FR)**

(74) Mandataire: **Loisel, Bertrand**
**Cabinet Plasseraud,**
**84, rue d'Amsterdam**
**75440 Paris Cédex 09 (FR)**

(56) Documents cités:
**WO-A-94/29981**
**WO-A-99/55104**
**WO-A-99/56410**
**GB-A- 2 308 044**
**US-A- 4 908 827**

- **3RD GENERATION PARTNERSHIP PROJECT (3GPP); TECHNICAL SPECIFICATION GROUP RADIO ACCESS NETWORK MULTIPLEXING AND CHANNEL CODING (FDD), (3G TS 25.212 VERSION 3.0.0), [en ligne] octobre 1999 (1999-10), XP002149187 Extrait de l'Internet: <URL:ftp://ftp.3gpp.org/Specs/October_99/25_series/25212-300.zip> [extrait le 2000-10-03]**

EP 1 117 203 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne les transmissions numériques, et plus précisément la mise en forme d'un ou plusieurs flux de symboles d'information à transmettre sur un ou plusieurs canaux de communication.

Dans la présente description, l'invention sera décrite plus particulièrement dans son application, non limitative, aux réseaux de radiocommunication de troisième génération de type UMTS (« Universal Mobile Telecommunication System »). Une description générale de ce système est présentée dans l'article : « L'UMTS : la génération des mobiles multimédia » de P. Blanc et al., L'Echo des Recherches, n° 170, 4$^{e}$ trimestre 1997 / 1$^{er}$ trimestre 1998, pages 53-68. Dans ce système, l'invention trouve application dans le cadre des liaisons descendantes (« downlink »), c'est-à-dire des stations de base vers les équipements terminaux, en mode de duplex fréquentiel (FDD, « Frequency Domain Duplex »).

L'UMTS est un système de radiocommunication utilisant un accès multiple à répartition par codes (CDMA, « Code-Division Multiple Access »), c'est-à-dire que les symboles transmis sont multipliés par des codes d'étalement constitués d'échantillons appelés « chips » dont la cadence (3,84 Mchip/s dans le cas de l'UMTS) est supérieure à celle des symboles transmis. Les codes d'étalement distinguent différents canaux physiques PhCH (« Physical CHannel ») qui sont superposés sur la même ressource de transmission constituée par fréquence porteuse. Les propriétés d'auto- et d'intercorrélation des codes d'étalement permettent au récepteur de séparer les PhCH et d'extraire les symboles qui lui sont destinés. Pour l'UMTS en mode FDD sur la liaison descendante, un code de brouillage est alloué à chaque station de base, et différents canaux physiques utilisés par cette station de base sont distingués par des codes de « channelisation » mutuellement orthogonaux. Pour chaque PhCH, le code d'étalement global est le produit du code de « channelisation » et du code de brouillage de la station de base. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques obéissent à une structure de trame illustrée par la figure 1. Les trames de 10 ms se succèdent sur la fréquence porteuse utilisée par la station de base. Chaque trame est subdivisée en 15 tranches temporelles (« timeslots ») de 666 $\mu$s. Chaque tranche peut porter les contributions superposées d'un ou plusieurs canaux physiques, comprenant des canaux communs et des canaux dédiés DPCH (« Dedicated Physical CHannel »). Le diagramme inférieur de la figure 1 illustre la contribution d'un DPCH descendant à une tranche temporelle en mode FDD, qui comporte

- un certain nombre de symboles pilotes PL placés à la fin de la tranche. Connus a priori du terminal, ces symboles PL lui permettent d'acquérir la synchronisation et d'estimer des paramètres utiles à la démodulation du signal ;
- une indication de combinaison de format de transport TFCI (« Transport Format Combination Indicator »), placée au début de la tranche ;
- une commande de puissance d'émission TPC («Transmit Power Control ») à utiliser par le terminal sur la liaison montante ; et
- deux champs de données, notés DATA1 et DATA2, placés de part et d'autre du champ TPC.

Le DPCH peut ainsi être vu comme réunissant un canal physique dédié pour le contrôle, ou DPCCH (« Dedicated Physical Control CHannel »), correspondant aux champs TFCI, TPC et PL, et un canal physique dédié pour les données, ou DPDCH (« Dedicated Physical Data CHannel »), correspondant aux champs DATA1 et DATA2.

Il est possible, pour une même communication, d'établir plusieurs DPCH correspondant à des codes de « channelisation » différents, dont les facteurs d'étalement peuvent être égaux ou différents. Cette situation est notamment rencontrée lorsqu'un DPDCH ne suffit pas à fournir le débit de transmission requis par l'application. Dans la suite, on note Y le nombre, égal ou supérieur à 1, de canaux physiques descendants utilisés pour une même communication depuis une station de base.

Par ailleurs, cette même communication peut utiliser un ou plusieurs canaux de transport TrCH (« Transport CHannel »). Des TrCH multiplexés sont typiquement utilisés pour des transmissions multimédia, dans lesquelles des signaux de natures différentes à transmettre simultanément requièrent des caractéristiques de transport différentes, notamment en matière de protection contre les erreurs de transmission. D'autre part, certains codeurs peuvent délivrer, pour représenter un signal donné (par exemple audio), plusieurs flux de symboles ayant des importances perceptuelles différentes et requérant donc des degrés de protection différents. On utilise alors des TrCH multiples pour transporter ces différents flux de symboles. Dans la suite, on note X le nombre, égal ou supérieur à 1, de canaux de transport utilisés pour une communication donnée sur les Y canaux physiques précités.

Pour chaque canal de transport i ($1 \leq i \leq X$), il est défini un intervalle de temps de transmission TTI (« Transmission Time Interval ») composé de $F_i$ trames consécutives, avec $F_i$ = 1, 2, 4 ou 8. De façon typique, on utilise un TTI d'autant plus court que le signal véhiculé par le canal de transport doit être reçu avec un faible retard. Par exemple, un TTI de 10 ms ($F_i$ = 1) sera utilisé pour une application de téléphonie, tandis qu'un TTI de 80 ms ($F_i$ = 8) pourra être

utilisé pour une application de transmission de données.

Le multiplexage des X flux de symboles d'information issus des TrCH sur les Y PhCH est décrit en détail dans la spécification technique 3G TS 25.212, « Multiplexing and channel coding (FDD)», version 3.0.0 publiée en octobre 1999 par le 3GPP (3rd Generation Partnership Project), qui peut être chargée depuis ftp://ftp.3gpp.org/Specs/October_99/25_series/.

La figure 2 illustre schématiquement la partie émission d'une station de base UMTS fonctionnant en mode FDD. Le bloc 1 désigne l'ensemble des sources délivrant respectivement des flux de symboles d'information $a_i$ ($1 \leq i \leq X$) relativement aux X TrCH utilisés dans une communication.

Le bloc 2 multiplexe les flux $a_i$ pour former ce qu'on appelle un canal de transport composite codé, ou CCTrCH (« Coded Composite Transport CHannel »), qui est ensuite subdivisé en un ou plusieurs canaux physiques PhCH#j ($1 \leq j \leq Y$) sur lesquels sont transmis des flux synchronisés de symboles respectivement notés $r_j$.

Le bloc 3 désigne les circuits qui modulent les flux $r_j$ et les combinent pour former un signal traité par l'étage radio 4 avant d'être émis sur l'interface air. Le bloc 3 assure l'étalement, par les codes de « channellisation » affectés aux PhCH, de chacun des flux $r_j$, ainsi que des flux supplémentaires éventuellement délivrés pour d'autres communications supportées au même moment par la station de base, les différents flux de symboles ainsi étalés étant ensuite sommés puis multipliés par le code de brouillage de la station de base. Le séquencement et le paramétrage des blocs 1, 2, 3 est assuré par une unité de contrôle 5 conformément aux paramètres définis pour la station de base et pour la communication considérée.

La figure 3 illustre schématiquement la partie réception d'un terminal UMTS communiquant en mode FDD avec une station de base selon la figure 2. Le bloc 7 démodule le signal en bande de base restitué par l'étage radio 6 à partir du signal capté par l'antenne du terminal, en utilisant le code de brouillage de la station de base et les Y codes de « channelisation » affectés au terminal. Pour chacun des Y canaux physiques j ($1 \leq j \leq Y$), le bloc 7 délivre des données $r'_j$ représentant des estimations des symboles du flux $r_j$ formé au niveau de la station de base.

Dans le cas où les symboles sont des bits, les estimations $r'_j$ sont des « softbits », c'est-à-dire des valeurs numériques dont le signe caractérise le bit estimé et la valeur absolue représente la vraisemblance de cette estimation.

Les Y flux de données $r'_j$ sont fournis à un bloc de démultiplexage 8 qui effectue les opérations inverses du multiplexeur 2 de la station de base. Ce bloc 8 délivre pour chaque canal de transport i ($1 \leq i \leq X$) un flux $a'_i$ d'estimations (softbits ou hardbits) des symboles du flux $a_i$. Ces estimations $a'_i$ sont fournies au circuit de traitement du TrCH i appartenant au bloc 9. Le séquencement et le paramétrage des blocs 7, 8, 9 est assuré par une unité de contrôle 10 du terminai.

Ainsi qu'il est usuel dans le domaine des radiocommunications numériques, les blocs 1-3, 5 de la station de base et 7-10 du terminal peuvent être réalisés en programmant un ou plusieurs processeurs de signal numérique, et/ou en utilisant des circuits logiques spécifiques.

Les figures 4 et 5 détaillent respectivement les différents modules fonctionnels des blocs de multiplexage 2 et de démultiplexage 8 (voir la spécification 3G TS 25.212 précitée). Sur ces figures, les références portant l'indice i ($1 \leq i \leq X$) désignent les éléments se rapportant au TrCH i (blocs $20_i$ et $40_i$), les références portant l'indice j désignent les éléments se rapportant au PhCH j ($1 \leq j \leq Y$), et les références sans indice se rapportent aux opérations effectuées pour chaque trame au niveau CCTrCH.

Le flux $a_i$ à transmettre sur chaque TRCH i est composé de symboles binaires délivrés sous forme de blocs de transport successifs TrBk (« Transport Block »). Le module $21_i$ complète chaque TrBk en y ajoutant un code de redondance cyclique CRC, servant à détecter d'éventuelles erreurs de transmission. Les TrBk $b_i$ sont ensuite concaténés et/ou segmentés par le module $22_i$ pour former des blocs $o_i$ de taille appropriée pour l'entrée du codeur de canal $23_i$.

Pour chaque TTI du canal de transport i, le codeur de canal $23_i$ délivre une séquence $c_j$ de $E_i$ bits codés notés $c_{i,m}$ ($1 \leq m \leq E_i$). Deux types de code correcteur d'erreurs peuvent être appliqués par le module $23_i$ :

- un code convolutif de rendement 1/2 ou 1/3 et de longueur de contrainte K=9;
- un turbocode de rendement 1/3 pour les applications requérant les taux d'erreurs les plus faibles. Dans ce cas, les bits $c_{i,3p+q}$ de la séquence de sortie du codeur sont des bits systématiques (recopiés des blocs d'entrée $o_i$) si q = 1, et des bits de parité si q = 2 ou 0.

Les modules $24_i$ d'adaptation de débit (« rate matching ») suppriment (poinçonnent) ou répètent des bits des séquences $c_i$ afin d'adapter le débit binaire des TrCH au débit global admissible sur le ou les PhCH compte tenu de leurs facteurs d'étalement. Pour chaque TTI sur le TrCH i, il est défini, à partir des informations fournies par les couches supérieures de protocole, un paramètre $\Delta N_i^{TTI}$ négatif dans le cas du poinçonnage et positif dans le cas de la répétition. La séquence $g_i$ produite par le module $24_i$ pour le TTI est composée de $G_i = E_i + \Delta N_i^{TTI}$ bits notés $g_{i,n}$ ($1 \leq n \leq G_i$). Dans le cas où le module $23_i$ a utilisé un turbocode, le poinçonnage appliqué par le module $24_i$ si $\Delta N_i^{TTI} < 0$ est limité aux bits de parité compte tenu de l'importance plus grande des bits systématiques pour le décodeur.

Dans une trame donnée, les périodes consacrées aux différents TrCH de la communication peuvent avoir des positions fixes (avant l'entrelacement intra-trame évoqué ci-après) ou des positions variables. Dans le cas des positions fixes, il peut être nécessaire d'adjoindre à la séquence $g_i$, au moyen du module $25_i$, un ou plusieurs symboles marqués qui ne seront pas transmis (la valeur du bit correspondant sera par exemple mise à zéro au lieu de ±1 dans le flux de sortie $r_j$ comportant un tel symbole pour que la puissance d'émission du symbole soit nulle). On note « δ » les bits de DTX (« Discontinuous Transmission ») ainsi marqués. Dans l'exemple d'implémentation considéré ici de manière non limitative, chaque symbole $h_{i,n}$ de la séquence $h_i$ délivrée par le module $25_i$($0 \le n \le F_i.H_i$, avec $G_i \le F_i.H_i$) est représenté par deux bits :

- $h_{i,n} = (0, g_{i,n})$ si $n \le G_i$ :
- $h_{i,n} = (1, 0)$ si $G_i < n \le F_i.H_i$ (bits marqués « δ »).

Le module d'entrelacement $26_i$ effectue une permutation de la séquence $h_i$, en vue de distribuer les symboles relevant du TTI sur les $F_i$ trames qu'il couvre. Cet entrelacement consiste à écrire successivement les symboles de la séquence $h_i$ dans les lignes d'une matrice comportant $F_i$ colonnes, à permuter les colonnes de la matrice, puis à lire les symboles de la matrice colonne après colonne pour former la séquence notée $q_i$. Le module $27_i$ découpe ensuite la séquence $h_i$ en $F_i$ segments de symboles consécutifs correspondant aux $F_i$ colonnes de la matrice d'entrelacement après permutation, et affecte respectivement ces segments aux $F_i$ trames du TTI pour former une séquence notée $f_i$ pour chaque trame et chaque TrCH i ($1 \le i \le X$).

Conformément à la spécification 3G TS 25.212, la permutation de colonnes effectuée par l'entrelaceur $26_i$ est telle que le symbole $h_{i,n}$ se retrouve dans la trame de rang $n_i = BR(n-1, F_i)$ du TTI, les trames du TTI étant numérotées de $n_i = 0$ à $n_i = F_i-1$, et $BR(x, 2^y)$ étant défini comme l'entier dont la représentation en base 2 correspond à la lecture en sens inverse de la représentation en base 2 sur y chiffres du reste de la division euclidienne de x par $2^y$ (par exemple, $BR(51, 8) = BR(3, 8) = BR([011]_2, 2^3) = [110]_2 = 6$).

Les séquences $f_i$ produites pour les différents TrCH de la communication ($1 \le i \le X$) sont multiplexées, c'est-à-dire placées les unes à la suite des autres, par un module 28 formant une séquence s de S symboles pour le CCTrCH. Dans le cas où les périodes consacrées aux différents TrCH de la communication ont des positions variables, il peut être nécessaire d'adjoindre à la séquence s, au moyen du module 29, un ou plusieurs symboles marqués « δ ». Dans l'exemple d'implémentation considéré ici, chaque symbole $w_k$ de la séquence w délivrée par le module 29

$$(1 \le k \le \sum_{j=1}^{Y} U_j ,$$

avec

$$S \le \sum_{j=1}^{Y} U_j$$

et $U_j$ égal au nombre de bits par trame sur le DPDCH du canal physique j, lequel nombre dépend du facteur d'étalement alloué au canal) est représenté par deux bits :

- $W_k = (0, S_k)$ si $k \le S$ ;

$$- \; w_k = (1, 0) \text{ si } S < k \le \sum_{j=1}^{Y} U_j .$$

Le module 30 découpe ensuite la séquence w en Y segments de $U_1$, $U_2$, ..., $U_Y$ symboles consécutifs, et affecte respectivement ces segments aux Y PhCH pour former une séquence notée $u_j$ pour chaque PhCH j ($1 \le j \le Y$). Le module d'entrelacement $31_j$ effectue une permutation de la séquence $u_j$, en vue de distribuer les symboles, au

sein de la trame courante, sur les Y PhCH employés par la communication. Cet entrelacement consiste à écrire successivement les symboles de la séquence $u_j$ dans les lignes d'une matrice comportant trente colonnes, à permuter les colonnes de la matrice, puis à lire les symboles de la matrice colonne après colonne pour former la séquence de $U_j$ symboles notée $v_j$.

Le module $32_j$ de remplissage du canal physique (« physical channel mapping ») distribue finalement les symboles successifs de la séquence $v_j$ dans les champs DATA1 et DATA2 des tranches temporelles de la trame courante. Le module $32_j$ peut traduire les bits d'information à valeurs 0 ou 1 en bits signés (±1), et affecter la valeur 0 aux bits marqués « δ ». Il complète en outre le flux $r_j$ adressé au bloc 3 en insérant les bits de signalisation adéquats dans les champs PL, TFCI et TPC du DPCCH.

Le bloc de démultiplexage 8 comporte des modules qui effectuent, dans le sens inverse, les opérations duales des modules $20_i$-$32_j$ du bloc de multiplexage 2. Sur la figure 5, les références primées correspondent aux estimations des symboles portant les mêmes références non primées sur la figure 4. Pour les symboles composés de deux bits formatés comme indiqué ci-dessus en raison du marquage des bits « δ », ces estimations (softbits) se rapportent au bit de poids le plus faible.

Pour chaque trame de 10 ms et chaque PhCH, le module $52_j$ extrait des champs DATA1 et DATA2 du signal démodulé la séquence $v'_j$ de $U_j$ softbits relevant du DPDCH. Le module de désentrelacement $51_j$ applique à cette séquence $V'_j$ la permutation inverse du module $31_j$ pour restituer la séquence de softbits $u'_j$. Les Y séquences $U'_j$ sont mises bout à bout par le module de multiplexage 50 pour former la séquence de softbits w' relative au CCTrCH. Dans le cas où les TrCH sont à positions variables, le module 49 supprime les

$$\sum_{j=1}^{Y} U_j - S$$

derniers softbits de la séquence w', qui correspondent à des bits « δ ». La séquence de softbits s' produite par le module 49 est découpée par le module de segmentation 49 en X sous-séquences $f'_i$ respectivement affectées aux TrCH.

Pour chaque TrCH i dont le TTI comporte plusieurs trames ($F_i > 1$), le module $47_i$ concatène les sous-séquences produites relativement aux différentes trames pour former la séquence $q'_i$ soumise au module de désentrelacement inter-trame $46_i$. Celui-ci opère la permutation inverse du module $26_i$ pour restituer la séquence de softbits $h'_i$. Dans le cas où les TrCH sont à positions fixes, le module $45_i$ supprime les $F_i.H_i - G_i$ derniers softbits de la séquence $h'_i$, qui correspondent à des bits « δ ». La séquence de softbits s' produite par le module 49 est ensuite traitée par le module d'adaptation de débit $44_i$ qui effectue les opérations suivantes :

- insertion d'un softbit nul (vraisemblance minimale) à la place de chaque bit qui a été poinçonné à l'émission ;
- réévaluation de chaque softbit correspondant un bit qui a été répété à l'émission, afin d'en affiner la vraisemblance.

La séquence de sortie $c'_i$ du module $44_i$ est décodée par le module $43_i$ afin de corriger d'éventuelles erreurs de transmission. Les symboles des blocs décodés $o'_i$ délivrés par le module $43_i$ peuvent être des softbits, ou des hardbits si les mesures de vraisemblance ne sont plus nécessaires dans les traitements ultérieurs. A partir de ces blocs $o'_i$, le module $42_i$ reconstitue les TrBk estimés $b'_i$, et le module $41_i$ vérifie l'intégrité du CRC pour valider ces TrBk dans le flux de sortie $a'_i$ relatif au TrCH i.

Dans le système UMTS, en particulier en mode FDD, il est prévu que les terminaux en communication puissent disposer de fenêtres temporelles pour écouter une ou plusieurs fréquences porteuses distinctes de celle supportant la communication. Ce processus d'écoute permet notamment aux terminaux équipés d'un seul récepteur radiofréquence d'effectuer des mesures de paramètres radio (module 11 de la figure 3) en vue d'un éventuel transfert automatique (handover) :

- d'une cellule UMTS FDD vers une autre cellule UMTS FDD utilisant une porteuse différente :
- d'une cellule UMTS FDD vers une cellule UMTS TDD (« Time Domain Duplex ») ; ou encore
- d'une cellule UMTS FDD vers une cellule d'un réseau de seconde génération tel qu'un réseau GSM.

Pendant la fenêtre d'écoute, qui peut s'étendre sur une ou plusieurs tranches temporelles de 666 μs, la station de base interrompt sa transmission vers le terminal. Cette interruption est propre à l'interface air, et n'a pas d'incidence sur le débit de sortie des sources du bloc 1 relatives aux différents TrCH. Au cours de chaque trame de 10 ms ayant une période inactive (pendant laquelle aucun symbole n'est transmis), on doit donc, en dehors de cette période inactive,

augmenter la débit de transmission sur les Y PhCH.

On dit que ces trames utilisent un mode comprimé. Pour que la qualité en termes de taux d'erreur binaire (BER) ou de taux d'erreur de trame (FER) ne soit pas affectée par l'interruption de transmission, la puissance d'émission par la station de base est augmentée dans les trames en mode comprimé en dehors de la période inactive.

Les interruptions de transmission peuvent avoir lieu périodiquement ou à la demande. Au cours d'une trame donnée, le nombre de tranches temporelles couvertes par la période inactive est au maximum de 7. L'illustration de la figure 1 montre deux interruptions de transmission GAP1, GAP2. L'interruption GAP1 tombe dans une seule trame en mode comprimé T1, alors que l'interruption GAP2 tombe à cheval sur deux trames en mode comprimé T2, T2'. Des interruptions s'étendant sur deux trames consécutives, telles GAP2, sont notamment utiles pour les handovers vers les réseaux GSM requérant une fenêtre de mesure de 6 ms.

Comme indiqué dans la spécification 3G TS 25.212 précitée, une interruption allant de la tranche $N_{first}$ à la tranche $N_{last}$ commence au champ TFCI ou DATA2 de la tranche $N_{first}$, et se termine au champ DATA2 de la tranche $N_{last}$. Dans les deux cas, les modules $32_j$ du bloc de multiplexage 2 génèrent la période inactive de la trame en mode comprimé en plaçant les bits d'information dans les champs DATA1 et DATA2 restants.

En mode comprimé, deux méthodes A et B peuvent être utilisées pour adapter le débit binaire des PhCH à celui des TrCH.

La méthode A consiste en un poinçonnage supplémentaire (par rapport à celui éventuellement appliqué par le module d'adaptation de débit $24_i$), servant à créer l'interruption de transmission dans chaque trame concernée.

La méthode B consiste à diviser par 2 les Y facteurs d'étalement employé dans les trames en mode comprimé. Une limitation de cette méthode B est qu'elle requiert que des codes d'étalement de facteur moitié soient disponibles, ce qui pénalise les ressources de code dans la cellule.

La méthode A pose un problème lorsque la communication utilise au moins un TrCH dont l'intervalle de temps de transmission couvre plusieurs trames ($F_i > 1$) : si l'une de ces trames est en mode comprimé, il faut réaliser le poinçonnage supplémentaire spécifiquement dans cette trame, ce qui est délicat compte tenu de l'entrelacement appliqué par les modules $26_i$ et des décalages générés dans la séquence de symboles par le module d'adaptation de débit $24_i$. Une contrainte supplémentaire dans le cas où un turbocode est utilisé pour le codage de canal sur un TrCH est qu'il n'est pas souhaitable de poinçonner des bits systématiques.

En conséquence, le mode comprimé selon la méthode A nécessite a priori des modifications assez importantes de la chaîne de multiplexage et de démultiplexage selon les figures 4 et 5, d'où une augmentation de complexité des stations de base et des terminaux, qui doivent naturellement être compatibles à la fois avec le mode comprimé et avec le mode non comprimé.

Un but de la présente invention est de limiter l'impact de ces problèmes dans les systèmes utilisant une chaîne de traitement du genre de celle décrite précédemment.

L'invention propose ainsi un procédé de traitement de X flux de symboles d'information à transmettre sur Y canaux de communication, X et Y étant des entiers positifs, dans lequel les Y canaux de communication occupent simultanément une ressource de transmission organisée en trames successives, dans lequel les trames successives incluent des trames en mode comprimé ayant au moins une période inactive pendant laquelle aucun symbole n'est transmis, et dans lequel les symboles d'information de chaque flux i ($1 \le i \le X$) sont transmis au cours d'intervalles de temps de transmission successifs comprenant chacun $F_i$ trames consécutives, $F_i$ étant un entier positif. Pour chaque intervalle de temps de transmission relatif à un flux i ($1 \le i \le X$), on définit des entiers $E_i$, $\Delta N_i^{TTI}$ et $\triangle N^{cm}_i$ tels que $E_i > 0$, $\triangle N^{cm}_i < 0$ si ledit intervalle de temps de transmission comporte au moins une trame en mode comprimé et $\triangle N_i^{cm} = 0$ si ledit intervalle de temps de transmission ne comporte aucune trame en mode comprimé. Le procédé comprend les étapes suivantes pour chaque intervalle de temps de transmission relatif à un flux i ($1 \le i \le X$):

- former une première séquence de $E_i$ symboles codés à partir de symboles d'information dudit flux relevant dudit intervalle de temps de transmission ;
- former une seconde séquence de symboles incluant $E_i + \Delta N_i^{TTI} + \Delta N_i^{cm}$ symboles extraits de la première séquence et $-\Delta N_i^{cm}$ symboles marqués ;
- former une troisième séquence de symboles par une permutation des symboles de la seconde séquence ;
- distribuer les symboles de la troisième séquence en $F_i$ segments de symboles consécutifs, les $F_i$ segments étant respectivement affectés aux trames dudit intervalle de temps de transmission ; et
- pour chaque trame dudit intervalle de temps de transmission, former une quatrième séquence de symboles extraits du segment affecté à ladite trame,

ladite permutation et le placement des symboles marqués dans la seconde séquence lorsque ledit intervalle de temps de transmission comporte au moins une trame en mode comprimé étant tels que chaque symbole marqué appartienne, dans la troisième séquence, à un segment affecté à une trame en mode comprimé, et les étapes suivantes pour chaque trame :

- former une cinquième séquence de symboles incluant les symboles de ia quatrième séquence délivrée pour ladite trame relativement à chaque flux ;
- distribuer les symboles de la cinquième séquence en Y segments de symboles, les Y segments étant respectivement affectés aux Y canaux de communication ;
- pour chaque canal de communication, former une sixième séquence de symboles extraits du segment affecté audit canal de communication ;
- pour chaque canal de communication, former une septième séquence de symboles par une permutation des symboles de la sixième séquence ; et
- transmettre sur chaque canal de communication, dans des tranches temporelles de ladite trame, des symboles extraits de la septième séquence,

chacun desdits symboles marqués étant supprimé avant la transmission sur chaque canal de communication lorsque ladite trame est en mode comprimé, de façon à ménager ladite période inactive au cours de la trame.

Les - $\Delta N_i^{cm}$ symboles marqués correspondent à ceux auxquels est appliqué le poinçonnage supplémentaire dans le cadre de la méthode A évoquée ci-dessus. L'utilisation d'un marquage permet de ne pas les poinçonner réellement au niveau de l'adaptation de débit, pour éviter d'avoir à modifier les modules d'entrelacement et de segmentation $26_i$, $27_i$, et éventuellement les autres modules de la chaîne de traitement. Il en résulte une simplification des entités en communication puisque ces mêmes modules pourront être utilisés de la même manière en mode comprimé et en mode non comprimé.

Dans un mode d'exécution préféré du procédé, lesdits symboles marqués sont conservés jusqu'aux septièmes séquences lorsque la trame est en mode comprimé, sans être extraits des septièmes séquences pour la transmission. Dans l'application précédemment décrite, ceci permet de ne modifier aucun des modules $26_i$ à $31_j$ de la chaîne de la figure 4, ni aucun des modules $46_i$ à $51_j$ de la chaîne de la figure 5.

Le procédé est compatible avec l'utilisation des bits de DTX telle que décrite précédemment. Il suffit pour cela d'insérer dans la seconde ou la cinquième séquence des symboles marqués supplémentaires, conservés jusqu'aux septièmes séquences pour être transmis avec une puissance d'émission nulle. On note que l'insertion des - $\Delta N_i^{cm}$ symboles marqués pour le poinçonnage supplémentaire peut être effectué soit avant, soit après l'insertion des bits de DTX dans le cas où les TrCH ont des positions fixes, c'est-à-dire avant ou après le module $25_i$.

Un autre aspect de la présente invention se rapporte à dispositif adapté à la mise en oeuvre du procédé ci-dessus, comprenant :

- des moyens de formation d'une première séquence de $E_i$ symboles codés à partir de symboles d'information de chaque flux i ($1 \leq i \leq X$) relevant d'un intervalle de temps de transmission ;
- des moyens de formation, pour chaque intervalle de temps de transmission relatif à un flux i ($1 \leq i \leq X$), d'une seconde séquence de symboles incluant $E_i + \Delta N_i^{TTI} + \Delta N_i^{cm}$ symboles extraits de la première séquence et - $\Delta N^{cm}_i$ symboles marqués
- des moyens de formation d'une troisième séquence de symboles par une première permutation des symboles de chaque seconde séquence ;
- des moyens de distribution des symboles de chaque troisième séquence, formée pour un intervalle de temps de transmission relatif à un flux i ($1 \leq i \leq X$), en $F_i$ segments de symboles consécutifs respectivement affectés aux trames dudit intervalle de temps de transmission, et de formation de $F_i$ quatrièmes séquences de symboles respectivement extraits des segments affectes auxdites trames ;
- des moyens de formation, pour chaque trame, d'une cinquième séquence de symboles incluant les symboles de la quatrième séquence délivrée pour ladite trame relativement à chaque flux i ($1 \leq i \leq X$);
- des moyens de distribution des symboles de chaque cinquième séquence en Y segments de symboles respectivement affectés aux Y canaux de communication ;
- des moyens de formation d'une sixième séquence de symboles extraits du segment affecté à chaque canal de communication ; et
- des moyens de formation d'une septième séquence de symboles par une seconde permutation des symboles de chaque sixième séquence, et de transmission, dans des tranches temporelles de chaque trame sur chaque canal de communication, de symboles extraits de la septième séquence c et ledit canal de communication,

dans lequel la première permutation et le placement des symboles marqués dans la seconde séquence, formée pour un intervalle de temps de transmission relatif à un flux i ($1 \leq i \leq X$) lorsque ledit intervalle de temps de transmission comporte au moins une trame en mode comprimé, sont tels que chaque symbole marqué appartienne, dans la troisième séquence formée pour ledit intervalle de temps de transmission, à un segment affecté à une trame en mode comprimé, chacun desdits symboles marqués étant supprimé avant la transmission sur chaque canal de communication de façon à ménager ladite période inactive au cours de la trame.

Ce dispositif peut notamment faire partie d'une station de base UMTS telle que décrite ci-dessus. L'invention a également une incidence au niveau des terminaux, dont la chaîne de démultiplexage doit être adaptée.

Un autre aspect de l'invention se rapporte ainsi à un procédé de traitement de Y flux numériques obtenus à partir d'un signal reçu et comprenant des estimations de symboles d'information respectivement transmis suivant Y canaux de communication occupant simultanément une ressource de transmission organisée en trames successives, et relevant de X canaux de transport, X et Y étant des entiers positifs, dans lequel les trames successives incluent des trames en mode comprimé ayant au moins une période inactive pendant laquelle aucun symbole n'est transmis, et dans lequel les estimations de symboles d'information relevant de chaque canal de transport i ($1 \leq i \leq X$) sont reçues au cours d'intervalles de temps de transmission successifs comprenant chacun $F_i$ trames consécutives, $F_i$ étant un entier positif. Ce procédé comprend les étapes suivantes pour chaque trame :

- former, relativement à chaque canal de communication j ($1 \leq j \leq Y$), une première séquence composée d'estimations extraites des tranches temporelles de ladite trame et, lorsque ladite trame est en mode comprimé, d'estimations marquées placées en des positions correspondant à la période inactive de ladite trame ;
- pour chaque canal de communication, former une seconde séquence d'estimations par une permutation des estimations de la première séquence ;
- former une troisième séquence d'estimations incluant des estimations de la seconde séquence délivrée pour chaque canal de communication ; et
- distribuer les estimations de la troisième séquence en X segments d'estimations consécutives, les X segments étant respectivement affectés aux X canaux de transport,

et les étapes suivantes pour chaque intervalle de temps de transmission relatif à un canal de transport i ($1 \leq i \leq X$) :

- former une quatrième séquence en concaténant les segments respectifs affectés audit canal de transport pour les trames dudit intervalle de temps de transmission ;
- permuter les estimations de la quatrième séquence et former une cinquième séquence d'estimations extraites de la quatrième séquence permutée ;
- ignorer chaque estimation marquée de la cinquième séquence, et former une sixième séquence de symboles sur la base des autres estimations de la cinquième séquence ; et
- décoder la sixième séquence d'estimations et délivrer les estimations décodées.

Les bits de DTX peuvent être pris en compte sans problème. Dans le cas où les TrCH ont des positions variables dans la trame, la formation de la troisième séquence comporte alors une concaténation des secondes séquences formées pour les Y canaux de communication et une suppression d'au moins une estimation ayant une position déterminée dans la séquence concaténée. Dans le cas où les TrCH ont des positions fixes dans la trame, la formation de la cinquième séquence pour l'un intervalle de temps de transmission incluant cette trame relativement à un canal de transport comporte une suppression d'au moins une estimation ayant une position déterminée dans la quatrième séquence permutée.

L'invention propose également un dispositif adapté à la mise en oeuvre de ce procédé, pouvant faire partie d'un terminal UMTS, et comprenant :

- des moyens de formation, pour chaque trame relativement à chaque canal de communication, d'une première séquence composée d'estimations extraites des tranches temporelles de ladite trame et, lorsque ladite trame est en mode comprimé, d'estimations marquées placées en des positions correspondant à la période inactive de ladite trame ;
- des moyens de formation, pour chaque trame relativement à chaque canal de communication, d'une seconde séquence d'estimations par une permutation des estimations de la première séquence ;
- des moyens de formation, pour chaque trame, d'une troisième séquence d'estimations incluant des estimations de la seconde séquence délivrée pour chaque canal de communication ;
- des moyens de distribution des estimations de la troisième séquence formée pour chaque trame en X segments d'estimations consécutives, les X segments étant respectivement affectés aux X canaux de transport ;
- des moyens de formation d'une quatrième séquence pour chaque intervalle de temps de transmission relatif à un canal de transport, par concaténation des segments respectifs affectés audit canal de transport pour les trames dudit intervalle de temps de transmission ;
- des moyens de permutation des estimations de la quatrième séquence formée pour chaque intervalle de temps de transmission relatif à un canal de transport i, et de formation d'une cinquième séquence d'estimations extraites de la quatrième séquence permutée ;
- des moyens de suppression de chaque estimation marquée de la cinquième séquence formée pour chaque intervalle de temps de transmission relatif à un canal de transport i, et de formation d'une sixième séquence de symboles sur la base des autres estimations de la cinquième séquence ; et

- des moyens de décodage de la sixième séquence d'estimations formée pour chaque intervalle de temps de transmission relatif à un canal de transport, pour délivrer les estimations décodées.

D'autres particularités et avantages de la présente invention apparaîtront dans la description ci-après d'exemples de réalisation non limitatifs, en référence aux dessins annexés, dans lesquels :

- la figure 1, précédemment commentée, est un schéma illustrant la structure de trame employée sur les liaisons descendantes dans le système UMTS en mode FDD ;
- les figures 2 et 3, précédemment commentées, sont des schémas synoptiques d'une station de base et d'un terminal UMTS auquel l'invention peut s'appliquer ;
- les figures 4 et 5, précédemment commentées, sont des schémas synoptiques des blocs de multiplexage et de démultiplexage de la station de base et du terminal selon les figures 2 et 3 ;
- les figures 6 et 7 sont des organigrammes de procédures utilisables pour réaliser l'adaptation de débit sur les TrCH dans le bloc de multiplexage selon la figure 4, dans le cas d'utilisation d'un code convolutif ;
- les figures 8 et 9 sont des organigrammes montrant respectivement des modifications apportées aux procédures des figures 6 et 7 conformément à deux modes de réalisation de l'invention ;
- les figures 10 et 11 sont des organigrammes similaires aux figures 6 et 8 pour le cas où les bits d'information du TrCH sont protégés par un turbocode.

L'invention est décrite ci-après dans le contexte précédemment décrit des liaisons UMTS descendantes en mode FDD. Dans les exemples considérés ci-après, les modifications apportées par l'invention se situent essentiellement au niveau des modules $24_i$, $44_i$ d'adaptation de débit et des modules $32_j$, $52_j$ d'interface avec les PhCH.

On considère d'abord le cas d'un TrCH i ($1 \le i \le X$) pour lequel le module $23_i$ applique un code convolutif. Dans ce cas, les bits de sortie du codeur ont tous la même importance relative pour le décodeur. Les figures 6 et 7 montrent un exemple de réalisation des procédures appliquées par le module d'adaptation de débit $24_i$ dans le cas d'un poinçonnage et d'une répétition de bits, respectivement.

Ces procédures utilisent des paramètres $e_{plus}$ et $e_{minus}$ définis en fonction des nombres de bits $E_i$, $G_i$ en entrée et en sortie du module $24_i$, avec $G_i < E_i$ dans le cas du poinçonnage (figure 6), et $G_i > E_i$ dans le cas de la répétition (figure 7). Les valeurs de ces paramètres sont :

$$e_{plus} = a.E_i$$

$$e_{minus} = a.|G_i - E_i| = a.|\Delta N_i^{TTI}|$$

avec a = 2. Les nombres $E_i$, $G_i$ sont déterminés en fonction des informations fournies par les couches supérieures de protocole comme décrit dans la spécification 3G TS 25.212. On note $\triangle N_i^{TTI}$ la variation du nombre de bits due à l'adaptation de débit statique. En mode non comprimé, on a $\Delta N_i^{TTI} = G_i - E_i$. Dans les notations utilisées sur les figures 6 et 7, m désigne l'index des symboles $c_{i,m}$ dans la séquence d'entrée $c_i$ ($1 \le m \le E_i$), n désigne l'index des symboles $g_{i,n}$ dans la séquence de sortie $g_i$ ($1 \le n \le G_i$), et e désigne un compteur décrémenté et incrémenté pour assurer une répartition régulière des bits poinçonnés ou répétés. A l'initialisation 60 de la procédure, on prend m = n = 1 et e = $E_i$.

Une boucle est exécutée pour les valeurs successives de l'index m comprises entre 1 et $E_i$. Chaque itération dans cette boucle commence par la décrémentation 63 du compteur e par la valeur $e_{minus}$. Le bit $c_{i,m}$ est poinçonné ou répété chaque fois que $e \le 0$ lors du test 64, auquel cas le compteur e est incrémenté à l'étape 65 de la valeur $e_{plus}$.

Dans le cas du poinçonnage (figure 6), le test 64 est effectué juste après la décrémentation 63 du compteur e dans chaque itération. $Q_{uand}$ e > 0 au test 64, le bit $c_{i,m}$ ne doit pas être poinçonné, et l'étape 66 est exécutée pour placer ce bit $C_{i,m}$ à la position n dans la séquence de sortie $g_i$ et pour incrémenter d'une unité l'index n. L'itération se termine par le test de fin de boucle 67 après l'étape 65 ou 66. La procédure d'adaptation de débit est terminée quand m = $E_i$. Sinon, m est incrémenté d'une unité à l'étape 68 avant de revenir à l'étape 63 pour l'itération suivante.

La procédure est similaire pour la répétition (figure 7), avec les différences suivantes :

- l'étape 66 de placement du bit $c_{i,m}$ dans la séquence de sortie et d'incrémentation de l'index n précède le test 64 portant sur le signe du compteur e ;
- cette étape 66 est exécutée pour tous les bits de la séquence d'entrée (après l'étape 63), et réexécutée chaque fois qu'un bit doit être répété (après l'étape 65) ;

- lorsque le bit a été suffisamment répété (e > 0 au test 64), l'itération se termine par le test de fin de boucle 67.

L'invention propose d'adapter les procédures de figures 6 et 7 au cas du mode comprimé, avec un impact minimal sur le reste de la chaîne de multiplexage. Ceci est effectué en plaçant des bits marqués « p » à des positions judicieusement choisies dans la séquence d'entrée de l'entrelaceur inter-trame $26_i$ pour chaque TrCH i.
Dans l'implémentation considérée plus haut, ce marquage peut consister à remplacer chaque bit « p » par le symbole de deux bits (1,1), qui reste disponible lorsque le marquage (1,0) est réservé aux bits « δ ». On observera toutefois que le marquage des bits « p » pourrait être le même que celui des bits « δ ».
Le marquage des bits « p » avant l'entrelaceur $26_i$ permet de réaliser en aval dans la chaîne le poinçonnage supplémentaire requis par le mode comprimé. De préférence, ce poinçonnage supplémentaire est effectué au niveau des modules $32_j$ relatifs aux Y PhCH : ces modules repèrent les bits marqués « p », les positionnent au niveau de l'interruption requise et ne les transmettent pas à l'étage radio 4 (ou transmettent des bits mis à zéro au lieu de bits signés). Ceci permet d'utiliser les modules $25_i$ à $31_j$ de la même façon en mode comprimé et en mode non comprimé
Au niveau du terminal récepteur, les modifications à apporter pour supporter le mode comprimé sont également mineures :

- pour chaque trame et chaque PhCH j, le module d'extraction $52_j$ complète les softbits $r'_j$ en plaçant des softbits marqués aux positions correspondant aux bits marqués « p ». Ces softbits marqués « p » ont une valeur particulière non employée pour les autres softbits, par exemple 0xFF pour des softbits d'un octet. Les positions des softbits à marquer sont immédiatement déterminables : elles correspondent aux champs DATA1 et DATA2 non transmis pendant l'interruption lorsque la trame est en mode comprimé. Le nombre $M_j^{TGL}$ de softbits marqués « p » est simplement la différence entre le nombre de bits traités sur le canal j dans une trame en mode non comprimé et le nombre de bits traités sur le canal j dans la trame courante ($N_j^{TGL} > 0$ en mode comprimé, et $N_j^{TGL} > 0$ en mode non comprimé) ;
- les modules $51_j$ à $45_i$ opèrent de la même manière en mode non comprimé et en mode comprimé ;
- en entrée des modules d'adaptation de débit $44_i$, qui fonctionnent comme décrit précédemment, les softbits marqués « p » sont détectés et supprimés de la séquence $g'_i$. Le module $44_i$ n'a pas besoin de connaître a priori les positions des bits du TrCH i qui ont subi le poinçonnage supplémentaire ;
- les modules $43_i$ à $41_i$ opèrent de la même manière en mode non comprimé et en mode comprimé.

On note $Nfr_i = (E_i + \Delta N_i^{TTI})/F_i$ le nombre de bits du TrCH i'par trame après l'adaptation de débit statique, et $-\Delta N^{cm}[n_i]$ le nombre de bits devant être marqués « p » dans la trame $n_i$ appartenant au TTI de ce TrCH ($0 \le n_i < F_i$). En mode comprimé, le nombre positif $- \Delta N^{cm}[n_i]$ dépend de la position et de la durée de l'interruption au cours de la trame $n_i$ du TTI, des facteurs d'étalement afférents aux Y canaux physiques et des taux d'adaptation de débit statique déjà pratiqués dans les X TrCH de la communication. Lorsque la trame n'est pas en mode comprimé, $\Delta N^{cm}[n_i] = 0$. Le nombre total $- \Delta N^{cm}_i$ de bits du TTI à marquer « p » est donné par

$$\Delta N_i^{cm} = \sum_{n_i=0}^{F_i-1} \Delta N^{cm}[n_i].$$

Finalement, la séquence $g_i$ de $G_i$ bits délivrée pour le TTI par le module $24_i$ comporte $E_i + \Delta N_i^{TTI} + \Delta N_i^{cm}$ symboles représentant des bits extraits de la séquence $c_i$ et $- \Delta N_i^{cm}$ symboles marqués « p ».
Une première façon de procéder au niveau de la station de base (ci-après méthode 1) consiste, pour chaque TrCH et chaque TTI de ce TrCH comportant au moins une trame en mode comprimé, à identifier les bits qui se trouveront dans la ou les trames en mode comprimé après les autres opérations, notamment d'entrelacement, exécutées dans la chaîne de multiplexage. Un algorithme du même genre que celui de la figure 6, est alors exécuté sur ces bits identifiés pour que certains soient marqués « p ».
La figure 8 illustre une réalisation selon cette méthode 1, en montrant des étapes 70-76 remplaçant l'étape 66 dans la procédure selon la figure 6 ou 7. Les paramètres $e_{plus}$ et $e_{minus}$ pour l'adaptation de débit sont définis comme précédemment ($e_{plus} = a.E_i$ et $e_{minus} = a.|\Delta N_i^{TTI}|$), et on définit en outre des paramètres de même nature pour le poinçonnage supplémentaire dans chaque TrCH i et chaque trame $n_i$ appartenant au TTI de ce TrCH :

$$e_{plus}^{cm}[n_i] = - a'.Nfr_i$$

$$e_{minus}^{cm}[n_i] = a'.\Delta N^{cm}[n_i]$$

avec a' = 2 (par exemple), et des compteurs supplémentaires $e^{cm}[n_i]$ sont initialisés à $Nfr_i$ à l'étape 60. A l'étape 70, l'index *col* de la trame du TTI dans laquelle se trouvera le symbole $g_{i,n}$ (colonne de l'entrelaceur $26_i$ après permutation) est calculé en utilisant la fonction BR définie précédemment. Si cette trame n'est pas en mode comprimé ($\Delta N^{cm}[col]$ = 0 au test 71), le symbole $g_{i,n}$ reçoit la valeur (0, $c_{i,m}$) à l'étape 72, puis l'index n est incrémenté d'une unité à l'étape finale 73. Si la trame est en mode comprimé ($\Delta N^{cm}[col] < 0$ au test 71), le compteur $e^{cm}[col]$ est décrémenté de la valeur $e_{minus}^{cm}[col]$. Quand $e^{cm}[col] \leq 0$ lors du test 75, le symbole $g_{i,n}$ est marqué « p » à l'étape 76 (le bit $c_{i,m}$ sera poinçonné), auquel cas le compteur $e^{cm}[col]$ est incrémenté de la valeur $e_{plus}^{cm}[col]$ avant d'incrémenter l'index n à l'étape finale 73. Quand $e^{cm}[col] > 0$ lors du test 75, le module 24 passe à l'étape 72 précitée pour affecter la valeur (0, $c_{i,m}$) au symbole $g_{i,n}$ qui sera conservé dans la trame en mode comprimé.

Une autre façon de procéder au niveau de la station de base (ci-après méthode 2) consiste, pour chaque TrCH i et chaque TTI de ce TrCH comportant au moins une trame en mode comprimé, à appliquer sur la séquence de bits $c_i$ l'algorithme d'adaptation de débit selon la figure 6 ou 7, en tenant compte, dans le nombre $\Delta N_i$ de bits à poinçonner ou répéter, à la fois de l'adaptation de débit statique ($\Delta N_i^{TTI}$) et de l'éventuel mode comprimé ($\Delta N_i^{cm}$), et à ajouter les $\Delta N_i^{cm}$ bits marqués « p » dans les premières positions des colonnes correspondant à des trames en mode comprimé. Ceci permet d'optimiser la distance entre les bits d'information poinçonnés ou répétés. Quatre cas se présentent :

1) $\Delta N_i^{TTI} < 0$, de sorte que $\Delta N_i = \Delta N_i^{TTI} + \Delta N_i^{cm} < 0$. Le taux de poinçonnage est simplement augmenté.
2) $\Delta N_i^{TTI} > 0$ et $|\Delta N_i^{cm}| > \Delta N_i^{TTI}$, de sorte que $\Delta N_i$, < 0. Malgré la répétition due à l'adaptation de débit statique, on devra quand même poinçonner des bits. Donc on ne répète rien, on poinçonne ΔN bits et on insère - $\Delta N_i^{cm}$ bits marqués « p ».
3) $\Delta N_i^{TTI} > 0$ et $|\Delta N_i^{cm} < \Delta_i^{TTI}$, de sorte que $\Delta N_i > 0$. On n'a pas besoin de poinçonner des bits d'information uniques. Il suffit de moins répbter que ce que demande l'adaptation de débit statique. Donc on répète ΔN bits et on insère - $\Delta N_i^{cm}$ bits marqués « p ».
4) $\Delta N_i^{TTI} > 0$ et $|\Delta N_i^{cm}| = \Delta N_i^{TTI}$, de sorte que ΔN = 0. On n'a besoin ni de poinçonner ni de répéter des bits d'information. Il suffit d'insérer - $\Delta N_i^{cm}$ bits marqués « p ».

La figure 9 illustre une réalisation selon cette méthode 2, en montrant des étapes 80-83 remplaçant l'étape 66 dans la procédure selon la figure 6 ou 7. Les paramètres $e_{plus}$ et $e_{minus}$ pour l'adaptation de débit sont définis par :

$$e_{plus} = a.E_i$$

$$e_{minus} = a.\left|\Delta N_i^{TTI} + \Delta N_i^{cm}\right|$$

et on utilise $F_i$ compteurs supplémentaires $cbi[n_i]$ dénombrant les bits « p » insérés au début des colonnes de l'entrelaceur ($0 \leq n_i < F_i$). Ces compteurs $cbi[n_i]$ sont initialisés à 0 à l'étape 60. A l'étape 80, l'index *col* de la trame du TTI dans laquelle se trouvera le symbole $g_{i,n}$ (colonne de l'entrelaceur $26_i$ après permutation) est calculé en utilisant la fonction BR. Si $cbi[col] < \Delta N^{cm}[col]$ (test 81), l'étape 82 est exécutée pour insérer un bit « p » à la position n de la séquence de sortie $g_i$ et incrémenter d'une unité le compteur cbi[col] et l'index n, après quoi le module $24_i$ revient à l'étape 80 pour la position suivante. Quand $cbi[coi] = \triangle N^{cm}[col]$ au test 81 (c'est-à-dire que la trame n'est pas en mode comprimé car $\triangle N^{cm}[col] = 0$, ou que tous le bits « p » requis ont été introduits dans la trame en mode comprimé), l'étape finale 83 est exécutée pour écrire le bit $c_{i,m}$ (avec le préfixe 0) dans le symbole $g_{i,n}$ et pour incrémenter l'index n d'une unité.

Dans le cas où le module de codage de canal $23_i$ utilise un turbocode de rendement 1/3, la procédure de poinçonnage est appliquée par le module d'adaptation de débit $24_i$ uniquement sur les bits de parité. Ceci est illustré par la figure 10. La procédure est similaire à celle de la figure 6, des références numériques identiques étant employées pour désigner des étapes homologues.

Le compteur e de la figure 6 est remplacé par deux compteurs $e_1$, $e_2$ affectés respectivement aux bits $c_{i,1+3x+k}$ avec k = 1 et k = 2. Ces deux compteurs sont initialisés à $E_i/3$ à l'étape 60. Le traitement de ces compteurs fait appel à des paramètres :

$$e_{k,plus} = a_k.E_i/3$$

$$e_{k,minus} = a_k.\left|\Delta N_{k,l}^{TTI}\right|$$

avec $a_1 = 2$ et $a_2 = 1$, $\Delta N_{1,i}^{TTI}$ et $\Delta N_{2,i}^{TTI}$ désignant respectivement le plus grand entier égal ou inférieur à $\Delta N_i^{TTI}/2$ et le plus petit entier égal ou inférieur à $\Delta N_i^{TTI}/2$.

A l'étape 61, le pointeur k est déterminé pour l'index courant m (c'est le reste de la division euclidienne de m-1 par 3). Si k = 0 (test 62), le bit $c_{i,m}$ est systématique et ne doit pas être poinçonné : on passe à l'étape 66. Quand k = 1 ou 2 au test 62, les étapes 63-66 sont exécutées comme dans le cas de la figure 6 en manipulant le compteur $e_k$ au lieu du compteur e pour poinçonner les bits appropriés.

En pratique, la procédure de la figure 10 peut être exécutée en séparant la séquence $c_i$ en deux sous-séquences : les bits systématiques ($C_{i,3x}$) non soumis au poinçonnage, et les autres bits auxquels est appliquée la procédure telle que décrite en référence à la figure 6 avec des paramètres adaptés en conséquence, la séquence $g_i$ étant ensuite construite en réinsérant les bits systématiques.

La figure 11 montre des étapes adaptées pour remplacer l'étape 66 de la figure 10 dans l'application de la méthode 1 au cas du poinçonnage avec un turbocode. Les étapes 70-76 sont tout à fait similaires à celles portant les mêmes références sur la figure 6, et ne sont exécutées que si k = 1 ou 2 au test initial 69. Si k = 0, on passe directement à l'étape 72 pour éviter de poinçonner le bit systématique. Les étapes 74-76 utilisent, à la place des compteurs $e^{cm}[n_i]$, des compteurs $e_k^{cm}[n_i]$ pour k = 1, 2 et $n_i$ = 0, 1, ..., $F_i$-1, qui sont initialisés à $Nfr_{k,i} = (E_i/3 + \Delta N^{TTI}{}_{k,i})/F_i$ à l'étape 60,. Le traitement de ces compteurs fait appel à des paramètres de poinçonnage :

$$e_{k,plus}^{cm}[col] = a_k.Nfr_{k,i}$$

$$e_{k,minus}^{cm}[col] = - a_k.\Delta N_k^{cm}[n_i],$$

l'entier positif ou nul $-\Delta N_k^{cm}[n_i]$ représentant le nombre de bits de parité k à poinçonner au cours de la trame $n_i$ du TTI ($\Delta N_1^{cm}[n_i] + \Delta N_2^{cm}[n_i] = \Delta N^{cm}[n_i]$).

Dans le cas de la répétition avec un turbocode, l'algorithme d'adaptation de débit est le même que celui de la figure 7. Le mode comprimé peut être pris en compte selon la méthode 1 en remplaçant l'étape 66 de la figure 7 par les étapes 69-76 de la figure 11.

Pour l'application de la méthode 2 au cas des turbocodes (répétition ou poinçonnage), il suffit de remplacer l'étape 66 de la figure 7 ou 10 par les étapes 80-83 de la figure 9.

L'annexe à la présente description fournit un pseudocode C correspondant à un exemple d'algorithme d'adaptation de débit appliqué par le module $24_i$ conformément à la présente invention (méthode 2).

## ANNEXE

*$e_{ini}$[]* Initial value of variable e in the rate matching pattern determination algorithm.

$e_{ini}$[1]: initial value for convolutional codes and for turbo codes Parity-1 bits

$e_{ini}$[2]: initial value for turbo codes Parity-2 bits

$e_{plus}$ [ ] Increment of variable *e* in the rate matching pattern determination algorithm.

$e_{plust}$[1]: Increment of variable *e* in the rate matching for convolutional codes and for turbo codes Parity-1 bits

$e_{plus}$[2]: Increment of variable *e* in the rate matching for turbo codes Parity-2 bits

$e_{minus}$[] Decrement of variable e in the rate matching pattern determination algorithm.

$e_{minus}$[1]: Decrement of variable e in the rate matching for convolutional codes and for turbo codes

Parity-1 bits

$e_{minus}$[2]: Decrement of variable e in the rate matching for turbo codes Parity-2 bits

**Initialisation:**

$\Delta N^{cm}_{ij}$. Negative or null: number of bits to be removed to create the required gaps in the compressed frames of the transmission time interval in case of compressed mode, in each transmission time interval on TrCH *i* with transport format *j*.

$\triangle N^{cm}$ []. Negative or null: number of bits to be removed in each frame of the TTI, to create if needed the required gaps in this fram,e in each transmission time interval on TrCH *i* with transport format *j*.The value will be nul for the un-compressed frames. The size of this array is F, the number of frames in the TTI.

For convolutional codes:

$$\triangle N_i = \Delta N_{il}^{TTI} + \Delta N_{cm} ;$$

$$Xi = NTTI_{il} ;$$

$$e_{ini}[1] = 1;$$

$$e_{plus}[1] = 2\ N_{il}^{TTI} ;$$

$$e_{minus}[1] = 2\ |\Delta N_i|$$

puncturing part of algorithm is applied if $\triangle N_i <= 0$, repetition is applied otherwise.

For Turbo Codes:

$$\Delta N_i\ [1]= \text{round down}\ (\Delta N^{TTI_{il}}/2) + \text{round up}(\Delta N^{cm}/2), \text{ if Y sequence}$$

$$\Delta N_i\ [2]= \text{round up}\ (\Delta N^{TTI_{il}}/2) + \text{round down}(\Delta N^{cm}/2), \text{ if Y' séquence}$$

$$X_i = N^{TTI_{il}}/3;$$

$$e_{ini}[1]=X_i;$$

$$e_{ini}[2]=X_i ;$$

$$e_{plus}[1]=2X_i ;$$

$$e_{plus}[2]=X_i ;$$

$$e_{minus}[1]=2|\Delta N_i[1]|;$$

$$e_{minus}[2] =|\Delta N_i[2]|$$

puncturing part of algorithm is applied if $\Delta N_1 [1] <= 0$ or $\Delta N_i [2] <=0$, repetition part is applied otherwise

**Algorithm:**

```
e [1] = e_ini [1]         -- initial error between current and desired puncturing ratio

α = 1                     -- parameter for the range of index m

if Turbo Codes then

   e [2] = e ini [2]

   if puncturing is needed then α = 2 else α = 3 endelse

endif

m = 1            -- index of current bit in the information bit flow (input flow)

n = 1            -- index of bit in the output flow before first interleaver

for i = 0 to F-1 do cbi[i] = 0        -- initiate counter of number of bits inserted in
                                         each frame of the TTI

    if puncturing is to be performed do while m <= α X,

       if Turbo Codes then

          c = m mod 2                 -- c = 1 if Parity-1 bit, c = 2 if Parity-2 bit

          if (c==1) then n = n+1 endif     -- in output flow increment output
                                              index to take into account bit X

       else

          c = 1

       endelse
```

```
      [c]= e[c] – e_minus [c]          -- update error
      if e[c] <= 0 then                -- check if bit number m should be punctured
        set bit x_i,m to δ where δ∉{0, 1}
        e[c] = e[c] + e_plus[c]        -- update error
      else
        col = BR[ (n-1) mod F]   -- calculate index of column where this bit will go
        while cbi[col] < |ΔN^cm [col]| do
          insert one bit marked « p » in output position n -- insert marked bit to be
                                                              removed in compressed
                                                              frame when creating the
                                                              gap
          n = n + 1                    -- update output index since 1 bit is inserted
          cbi[col] = cbi[col] + 1  -- update counter of bits p inserted in this column
          col = BR[ (n-1) mod F]-- update column value of next position
        enddo
        n = n + 1              -- update output index, since bit x_m was not punctured
      endelse
      m = m + 1                             -- next bit
    end do
  else
    do while m <= σ X_i
      e = e – e_minus                  -- update error
      col = BR[(n-1) mod F)]
      while cbi[col] <ΔN^cm[col] do
        insert one bit marked p in position n
```

```
        n = n + 1           -- update output index
        cbi[col] = cbi[col] + 1   -- update counter of bits p inserted in this column
        col = BR[ (n-1) mod F]   -- update column value of next position
      enddo
      do while e <= 0               -- check if bit number m should be repeated
        col = BR[ (n-1) mod F]          -- calculate column where the current
                                           position will go
        while cbi[col] <ΔN^cm[col] do
          insert one bit marked p
          n = n + 1              -- update output index since 1 bit has been inserted
          cbi[col] = cbi[col] + 1  -- update counter of bits p inserted in this column
          col = BR[ (n-1) mod F]   -- update column value of next position
        enddo
        repeat bit x_{i,m}
        n = n + 1                -- update output index since bit has been repeated
        e = e + e_plus           -- update error
      end do
      m = m + 1                  -- next bit
    end do
  end if
```

## Revendications

1. Procédé de traitement de X flux de symboles d'information à transmettre sur Y canaux de communication, X et Y étant des entiers positifs, dans lequel les Y canaux de communication occupent simultanément une ressource de transmission organisée en trames successives, dans lequel les trames successives incluent des trames en mode comprimé ayant au moins une période inactive pendant laquelle aucun symbole n'est transmis, dans lequel les symboles d'information de chaque flux i, où 1≤i≤X, sont transmis au cours d'intervalles de temps de transmission

successifs comprenant chacun $F_j$. trames consécutives, $F_i$ étant un entier positif, et dans lequel on définit, pour chaque intervalle de temps de transmission relatif à un flux i, des entiers $E_i$, $\Delta N_i^{TTI}$ et $\Delta N_i^{cm}$ tels que $E_i > 0$, $\Delta N_i^{cm} < 0$ si ledit intervalle de temps de transmission comporte au moins une trame en mode comprimé et $\Delta N_i^{cm} = 0$ si ledit intervalle de temps de transmission ne comporte aucune trame en mode comprimé,
le procédé comprenant les étapes suivantes pour chaque intervalle de temps de transmission relatif à un flux i:

- former une première séquence ($c_i$) de $E_i$ symboles codés à partir de symboles d'information dudit flux relevant dudit intervalle de temps de transmission ;
- former une seconde séquence de symboles ($h_i$) incluant $E_i + \Delta N_i^{TTI} + \Delta N_i^{cm}$ symboles extraits de la première séquence et - $\Delta N_i^{cm}$ symboles marqués ;
- former une troisième séquence de symboles ($q_i$) par une permutation des symboles de la seconde séquence ;
- distribuer les symboles de la troisième séquence en $F_i$ segments de symboles consécutifs, les $F_i$ segments étant respectivement affectés aux trames dudit intervalle de temps de transmission ; et
- pour chaque trame dudit intervalle de temps de transmission, former une quatrième séquence ($f_i$) de symboles extraits du segment affecté à ladite trame,

ladite permutation et le placement des symboles marqués dans la seconde séquence lorsque ledit intervalle de temps de transmission comporte au moins une trame en mode comprimé étant tels que chaque symbole marqué appartienne, dans la troisième séquence, à un segment affecté à une trame en mode comprimé,
et les étapes suivantes pour chaque trame :

- former une cinquième séquence de symboles (w) incluant les symboles de la quatrième séquence délivrée pour ladite trame relativement à chaque flux ;
- distribuer les symboles de la cinquième séquence en Y segments de symboles, les Y segments étant respectivement affectés aux Y canaux de communication ;
- pour chaque canal de communication, former une sixième séquence ($u_j$) de symboles extraits du segment affecté audit canal de communication ;
- pour chaque canal de communication, former une septième séquence de symboles ($v_j$) par une permutation des symboles de la sixième séquence ; et
- transmettre sur chaque canal de communication, dans des tranches temporelles de ladite trame, des symboles extraits de la septième séquence,

chacun desdits symboles marqués étant supprimé avant la transmission sur chaque canal de communication lorsque ladite trame est en mode comprimé, de façon à ménager ladite période inactive au cours de la trame.

**2.** Procédé selon la revendication 1, dans lequel lesdits symboles marqués sont conservés jusqu'aux septièmes séquences ($v_j$) lorsque ladite trame est en mode comprimé, sans être extraits des septièmes séquences pour la transmission.

**3.** Procédé selon la revendication 1 ou 2, dans lequel on insère dans la seconde ou la cinquième séquence ($h_i$, w) des symboles marqués supplémentaires, conservés jusqu'aux septièmes séquences ($v_j$) pour être transmis avec une puissance d'émission nulle.

**4.** Dispositif de traitement de X flux de symboles d'information à transmettre sur Y canaux de communication, X et Y étant des entiers positifs, les Y canaux de communication occupant simultanément une ressource de transmission organisée en trames successives, les trames successives incluant des trames en mode comprimé ayant au moins une période inactive pendant laquelle aucun symbole n'est transmis, les symboles d'information de chaque flux i, où $1 \leq i \leq x$, étant transmis au cours d'intervalles de temps de transmission successifs comprenant chacun $F_i$ trames consécutives, $F_i$ étant un entier positif, des entiers $E_i$, $\Delta N^{TTI}_i$ et $\Delta N_i^{cm}$ étant définis pour chaque intervalle de temps de transmission relatif à un flux i, avec $E_i > 0$, $\Delta N_i^{cm} < 0$ si ledit intervalle de temps de transmission comporte au moins une trame en mode comprimé et $\Delta N_i^{cm} = 0$ si ledit intervalle de temps de transmission ne comporte aucune trame en mode comprimé, le dispositif comprenant :

- des moyens ($21_i$-$23_i$) de formation d'une première séquence ($c_i$) de $E_i$ symboles codés à partir de symboles d'information de chaque flux i relevant d'un intervalle de temps de transmission ;
- des moyens ($24_i$-$25_i$) de formation, pour chaque intervalle de temps de transmission relatif à un flux i, d'une seconde séquence de symboles ($h_i$) incluant $E_i + \Delta N_i^{TTI} + \Delta N_i^{cm}$ symboles extraits de la première séquence et - $\Delta N_i^{cm}$ symboles marqués ;

- des moyens ($26_i$) de formation d'une troisième séquence de symboles ($q_i$) par une première permutation des symboles de chaque seconde séquence ;
- des moyens ($27_i$) de distribution des symboles de chaque troisième séquence, formée pour un intervalle de temps de transmission relatif à un flux i, en $F_i$ segments de symboles consécutifs respectivement affectés aux trames dudit intervalle de temps de transmission, et de formation de $F_i$ quatrièmes séquences ($f_i$) de symboles respectivement extraits des segments affectés auxdites trames ;
- des moyens (28-29) de formation, pour chaque trame, d'une cinquième séquence de symboles (w) incluant les symboles de la quatrième séquence délivrée pour ladite trame relativement à chaque flux i ;
- des moyens (30) de distribution des symboles de chaque cinquième séquence en Y segments de symboles respectivement affectés aux Y canaux de communication ;
- des moyens ($31_j$) de formation d'une sixième séquence ($u_j$) de symboles extraits du segment affecté à chaque canal de communication ; et
- des moyens ($32_j$) de formation d'une septième séquence de symboles ($v_j$) par une seconde permutation des symboles de chaque sixième séquence, et de transmission, dans des tranches temporelles de chaque trame sur chaque canal de communication, de symboles extraits de la septième séquence,

dans lequel la première permutation et le placement des symboles marqués dans la seconde séquence, formée pour un intervalle de temps de transmission relatif à un flux lorsque ledit intervalle de temps de transmission comporte au moins une trame en mode comprimé, sont tels que chaque symbole marqué appartienne, dans la troisième séquence formée pour ledit intervalle de temps de transmission, à un segment affecté à une trame en mode comprimé, chacun desdits symboles marqués étant supprimé avant la transmission sur chaque canal de communication de façon à ménager ladite période inactive au cours de la trame.

**5.** Dispositif selon la revendication 4, dans lequel les moyens ($26_i$-$32_j$) de formation des troisièmes, quatrièmes, cinquièmes, sixièmes et septièmes séquences de symboles ($q_i$, $f_i$, w, $u_j$, $v_j$) sont agencés pour conserver lesdits symboles marqués jusqu'aux septièmes séquences ($v_j$) formées pour chaque trame en mode comprimé, lesdits symboles marqués n'étant pas extraits des septièmes séquences pour la transmission.

**6.** Dispositif selon la revendication 4 ou 5, comprenant des moyens ($25_i$, 29) d'insertion, dans les secondes ou cinquièmes séquences ($h_i$, w), de symboles marqués supplémentaires qui sont conservés jusqu'aux septièmes séquences ($v_j$) pour être transmis avec une puissance d'émission nulle.

**7.** Station de base de radiocommunication, comprenant un dispositif de traitement selon l'une quelconque des revendications 4 à 6.

**8.** Procédé de traitement de Y flux numériques ($r'_j$) obtenus à partir d'un signal reçu et comprenant des estimations de symboles d'information respectivement transmis suivant Y canaux de communication occupant simultanément une ressource de transmission organisée en trames successives, et relevant de X canaux de transport, X et Y étant des entiers positifs, dans lequel les trames successives incluent des trames en mode comprimé ayant au moins une période inactive pendant laquelle aucun symbole n'est transmis, et dans lequel les estimations de symboles d'information relevant de chaque canal de transport i, où $1 \leq i \leq X$,sont reçues au cours d'intervalles de temps de transmission successifs comprenant chacun $F_i$ trames consécutives, $F_i$ étant un entier positif,
le procédé comprenant les étapes suivantes pour chaque trame :

- former, relativement à chaque canal de communication j, où $1 \leq j \leq y$, une première séquence ($v'_j$) composée d'estimations extraites des tranches temporelles de ladite trame et, lorsque ladite trame est en mode comprimé, d'estimations marquées placées en des positions correspondant à la période inactive de ladite trame ;
- pour chaque canal de communication, former une seconde séquence d'estimations ($u'_j$) par une permutation des estimations de la première séquence ;
- former une troisième séquence d'estimations (s') incluant des estimations de la seconde séquence délivrée pour chaque canal de communication ; et
- distribuer les estimations de la troisième séquence en X segments ($f'_i$) d'estimations consécutives, les X segments étant respectivement affectés aux X canaux de transport,

et les étapes suivantes pour chaque intervalle de temps de transmission relatif à un canal de transport :

- former une quatrième séquence ($q'_i$) en concaténant les segments respectifs ($f'_i$) affectés audit canal de transport pour les trames dudit intervalle de temps de transmission ;

- permuter les estimations de la quatrième séquence et former une cinquième séquence ($g'_i$) d'estimations extraites de la quatrième séquence permutée ($h'_i$) ;
- ignorer chaque estimation marquée de la cinquième séquence, et former une sixième séquence de symboles ($c'_i$) sur la base des autres estimations de la cinquième séquence ; et
- décoder la sixième séquence d'estimations et délivrer les estimations décodées ($a'_i$).

**9.** Procédé selon la revendication 8, dans lequel la formation de la troisième séquence (s') pour au moins une trame comporte une concaténation des secondes séquences ($u'_j$) formées pour les Y canaux de communication et une suppression d'au moins une estimation ayant une position déterminée dans la séquence concaténée (w').

**10.** Procédé selon la revendication 8, dans lequel la formation de la cinquième séquence ($g'_i$) pour au moins un intervalle de temps de transmission relatif à un canal de transport comporte une suppression d'au moins une estimation ayant une position déterminée dans la quatrième séquence permutée ($h'_i$).

**11.** Dispositif de traitement de Y flux numériques ($r'_j$) obtenus à partir d'un signal reçu et comprenant des estimations de symboles d'information respectivement transmis suivant Y canaux de communication occupant simultanément une ressource de transmission organisée en trames successives, et relevant de X canaux de transport, X et Y étant des entiers positifs, les trames successives incluant des trames en mode comprimé ayant au moins une période inactive pendant laquelle aucun symbole n'est transmis, les estimations de symboles d'information relevant de chaque canal de transport i, où $1 \leq i \leq X$, étant reçues au cours d'intervalles de temps de transmission successifs comprenant chacun $F_i$ trames consécutives, $F_i$ étant un entier positif, le dispositif comprenant :

- des moyens ($52_j$) de formation, pour chaque trame relativement à chaque canal de communication, d'une première séquence ($v'_j$) composée d'estimations extraites des tranches temporelles de ladite trame et, lorsque ladite trame est en mode comprimé, d'estimations marquées placées en des positions correspondant à la période inactive de ladite trame ;
- des moyens ($51_j$) de formation, pour chaque trame relativement à chaque canal de communication, d'une seconde séquence d'estimations ($u'_j$) par une permutation des estimations de la première séquence ;
- des moyens (50, 49) de formation, pour chaque trame, d'une troisième séquence d'estimations (s') incluant des estimations de la seconde séquence délivrée pour chaque canal de communication ;
- des moyens (48) de distribution des estimations de la troisième séquence formée pour chaque trame en X segments ($f'_i$) d'estimations consécutives, les X segments étant respectivement affectés aux X canaux de transport ;
- des moyens ($47_i$) de formation d'une quatrième séquence ($q'_i$) pour chaque intervalle de temps de transmission relatif à un canal de transport, par concaténation des segments respectifs ($f'_i$) affectés audit canal de transport pour les trames dudit intervalle de temps de transmission ;
- des moyens ($46_i$, $45_i$) de permutation des estimations de la quatrième séquence formée pour chaque intervalle de temps de transmission relatif à un canal de transport, et de formation d'une cinquième séquence ($g'_i$) d'estimations extraites de la quatrième séquence permutée ($h'_i$) ;
- des moyens ($44_i$) de suppression de chaque estimation marquée de la cinquième séquence formée pour chaque intervalle de temps de transmission relatif à un canal de transport, et de formation d'une sixième séquence de symboles ($c'_i$) sur la base des autres estimations de la cinquième séquence ; et
- des moyens ($43_i$-$41_i$) de décodage de la sixième séquence d'estimations formée pour chaque intervalle de temps de transmission relatif à un canal de transport, pour délivrer les estimations décodées ($a'_i$).

**12.** Dispositif selon la revendication 11, dans lequel les moyens de formation de la troisième séquence d'estimations (s') comprennent des moyens (50) de concaténation des secondes séquences ($u'_j$) formées pour les Y canaux de communication et des moyens (49) de suppression d'au moins une estimation ayant une position déterminée dans la séquence concaténée (w').

**13.** Dispositif selon la revendication 11, dans lequel les moyens de formation de la cinquième séquence ($g'_i$) comprennent des moyens ($45_i$) de suppression d'au moins une estimation ayant une position déterminée dans la quatrième séquence permutée ($h'_i$).

**14.** Terminal de radiocommunication, comprenant un dispositif de traitement selon l'une quelconque des revendications 11 à 13.

## Claims

**1.** Method of processing X streams of information symbols to be transmitted on Y communication channels, X and Y being positive integers, wherein the Y communication channels simultaneously occupy a transmission resource organized as successive frames, wherein the successive frames include compressed-mode frames each having at least one inactive period during which no symbol is transmitted, wherein the information symbols of each stream i, where $1 \leq i \leq X$, are transmitted in successive transmission time intervals each comprising $F_i$ consecutive frames, $F_i$ being a positive integer, and wherein, for each transmission time interval relating to a stream i, integers $E_i$, $\Delta N_i^{TTI}$ and $\Delta N_i^{cm}$ are defined such that $E_i > 0$, $\Delta N_i^{cm} < 0$ if said transmission time interval comprises at least one compressed-mode frame and $\Delta N_i^{cm} = 0$ if said transmission time interval does not comprise any compressed-mode frame,
the method comprising the following steps for each transmission time interval relating to a stream i:

- forming a first sequence ($c_i$) of $E_i$ coded symbols from information symbols of said stream pertaining to said transmission time interval;
- forming a second sequence of symbols ($h_i$) including $E_i + \Delta N_i^{TTI} + \Delta N_i^{cm}$ symbols extracted from the first sequence and $-\Delta N_i^{cm}$ marked symbols;
- forming a third sequence of symbols ($q_i$) by a permutation of the symbols of the second sequence;
- distributing the symbols of the third sequence into $F_i$ segments of consecutive symbols, the $F_i$ segments being respectively assigned to the frames of said transmission time interval; and
- for each frame of said transmission time interval, forming a fourth sequence ($f_i$) of symbols extracted from the segment assigned to said frame,

said permutation and the placing of the marked symbols in the second sequence when said transmission time interval comprises at least one compressed-mode frame being such that each marked symbol belongs, in the third sequence, to a segment assigned to a compressed-mode frame,
and the following steps for each frame:

- forming a fifth sequence of symbols (w) including the symbols of the fourth sequence output for said frame in relation to each stream;
- distributing the symbols of the fifth sequence into Y segments of symbols, the Y segments being respectively assigned to the Y communication channels;
- for each communication channel, forming a sixth sequence ($u_j$) of symbols extracted from the segment assigned to said communication channel;
- for each communication channel, forming a seventh sequence of symbols ($v_j$) by a permutation of the symbols of the sixth sequence; and
- transmitting on each communication channel, in time slots of said frame, symbols extracted from the seventh sequence,

each of said marked symbols being deleted before transmission on each communication channel when said frame is in compressed mode, so as to provide said inactive period within the frame.

**2.** Method according to Claim 1, wherein said marked symbols are kept until the seventh sequences ($v_j$) when said frame is in compressed mode, without being extracted from the seventh sequences for transmission.

**3.** Method according to Claim 1 or 2, wherein additional marked symbols are inserted into the second or the fifth sequence ($h_i$, w), these symbols being kept until the seventh sequences ($v_j$) so as to be transmitted with zero transmission power.

**4.** Device for processing X streams of information symbols to be transmitted on Y communication channels, X and Y being positive integers, the Y communication channels simultaneously occupying a transmission resource organized as successive frames, the successive frames including compressed-mode frames each having at least one inactive period during which no symbol is transmitted, the information symbols of each stream I, where $1 \leq i \leq X$ being transmitted in successive transmission time intervals each comprising $F_i$ consecutive frames, $F_i$ being a positive integer, integers $E_i$, $\Delta N_i^{TTI}$ and $\Delta N_i^{cm}$ being defined for each transmission time interval relating to a stream i, with $E_i > 0$, $\Delta N_i^{cm} < 0$ if said transmission time interval comprises at least one compressed-mode frame and $\Delta N_i^{cm} = 0$ if said transmission time interval does not comprise any compressed-mode frame, the device comprising:

- means ($21_i$-$23_i$) for forming a first sequence ($c_i$) of $E_i$ coded symbols on the basis of information symbols of each stream i pertaining to a transmission time interval;
- means ($24_i$-$25_i$) for forming, for each transmission time interval relating to a stream i, a second sequence of symbols ($h_i$) including $E_i + \Delta N_i^{TTI} + \Delta N_i^{cm}$ symbols extracted from the first sequence and $-\Delta N_i^{cm}$ marked symbols;
- means ($26_i$) for forming a third sequence of symbols ($q_i$) by a first, permutation of the symbols of each second sequence;
- means ($27_i$) for distributing the symbols of each third sequence, which is formed for a transmission time interval relating to a stream i, into $F_i$ segments of consecutive symbols respectively assigned to the frames of said transmission time interval, and for forming $F_i$ fourth sequences ($f_i$) of symbols respectively extracted from the segments assigned to said frames;
- means (28-29) for forming, for each frame, a fifth sequence of symbols (w) including the symbols of the fourth sequence output for said frame in relation to each stream i;
- means (30) for distributing the symbols of each fifth sequence into Y segments of symbols respectively assigned to the Y communication channels;
- means ($31_j$) for forming a sixth sequence ($u_j$) of symbols extracted from the segment assigned to each communication channel; and
- means ($32_j$) for forming a seventh sequence of symbols ($v_j$) by a second permutation of the symbols of each sixth sequence, and for transmitting, in time slots of each frame on each communication channel, symbols extracted from the seventh sequence,

wherein the first permutation and the placing of the marked symbols in the second sequence, which is formed for a transmission time interval relating to a stream when said transmission time interval comprises at least one compressed-mode frame, are such that each marked symbol belongs, in the third sequence which is formed for said transmission time interval, to a segment assigned to a compressed-mode frame, each of said marked symbols being deleted before transmission on each communication channel so as to provide said inactive period within the frame.

5. Device according to Claim 4, wherein the means ($26_i$-$32_j$) for forming the third, fourth, fifth, sixth and seventh sequences of symbols ($q_i$, $f_i$, w, $u_j$, $v_j$) are arranged to keep said marked symbols until the seventh sequences ($v_j$) which are formed for each compressed-mode frame, whereby said marked symbols are not extracted from the seventh sequences for transmission.

6. Device according to Claim 4 or 5, comprising means ($25_i$, 29) for inserting, into the second or fifth sequences ($h_i$, w), additional marked symbols which are kept until the seventh sequences ($v_j$) so as to be transmitted with zero transmission power.

7. Radiocommunication base station comprising a processing device according to any one of Claims 4 to 6.

8. Method of processing Y digital streams ($r'_j$) obtained from a received signal and comprising estimates of information symbols respectively transmitted along Y communication channels simultaneously occupying a transmission resource organized as successive frames, and pertaining to X transport channels, X and Y being positive integers, wherein the successive frames include compressed-mode frames each having at least one inactive period during which no symbol is transmitted, and wherein the estimates of information symbols pertaining to each transport channel i, where $1 \le i \le X$, are received in successive transmission time intervals each comprising $F_i$ consecutive frames, $F_i$ being a positive integer, the method comprising the following steps for each frame:

- forming, in relation to each communication channel j, where $1 \le j \le Y$, a first sequence ($v'_j$) composed of estimates extracted from the time slots of said frame and, when said frame is in compressed mode, of marked estimates placed at positions corresponding to the inactive period of said frame;
- for each communication channel, forming a second sequence of estimates ($u'_j$) by a permutation of the estimates of the first sequence;
- forming a third sequence of estimates (s') including estimates of the second sequence output for each communication channel; and
- distributing the estimates of the third sequence into X segments ($f'_i$) of consecutive estimates, the X segments being respectively assigned to the X transport channels,

and the following steps for each transmission time interval relating to a transport channel;

- forming a fourth sequence ($q'_i$) by concatenating the respective segments ($f'_i$) assigned to said transport channel for the frames of said transmission time interval;
- permuting the estimates of the fourth sequence and forming a fifth sequence ($g'_i$) of estimates extracted from the permuted fourth sequence ($h'_i$);
- ignoring each marked estimate of the fifth sequence, and forming a sixth sequence of symbols ($c'_i$) on the basis of the other estimates of the fifth sequence; and
- decoding the sixth sequence of estimates and outputting the decoded estimates ($a'_i$).

**9.** Method according to Claim 8, wherein the step of forming the third sequence (s') for at least one frame comprises concatenating the second sequences ($u'_j$) formed for the Y communication channels and deleting at least one estimate having a determined position in the concatenated sequence (w').

**10.** Method according to Claim 8, wherein the step of forming the fifth sequence ($g'_i$) for at least one transmission time interval relating to a transport channel comprises deleting at least one estimate having a determined position in the permuted fourth sequence ($h'_i$).

**11.** Device for processing Y digital streams ($r'_j$) obtained from a received signal and comprising estimates of information symbols respectively transmitted along Y communication channels simultaneously occupying a transmission resource organized as successive frames, and pertaining to X transport channels, X and Y being positive integers, the successive frames including compressed-mode frames each having at least one inactive period during which no symbol is transmitted, and the estimates of information symbols pertaining to each transport channel i, where $1 \leq i \leq X$, being received in successive transmission time intervals each comprising $F_i$ consecutive frames, $F_i$ being a positive integer, the device comprising:

- means ($52_j$) for forming, for each frame in relation to each communication channel, a first sequence ($v'_j$) composed of estimates extracted from the time slots of said frame and, when said frame is in compressed mode, marked estimates placed at positions corresponding to the inactive period of said frame;
- means ($51_j$) for forming, for each frame in relation to each communication channel, a second sequence of estimates ($u'_j$) by permutation of the estimates of the first sequence;
- means (50, 49) for forming, for each frame, a third sequence of estimates (s') including estimates of the second sequence output for each communication channel;
- means (48) for distributing the estimates of the third sequence formed for each frame into X segments ($f'_i$) of consecutive estimates, the X segments being respectively assigned to the X transport channels;
- means ($47_i$) for forming a fourth sequence ($q'_i$) for each transmission time interval relating to a transport channel, by concatenating the respective segments ($f'_i$) assigned to said transport channel for the frames of said transmission time interval;
- means ($46_i$, $45_i$) for permuting the estimates of the fourth sequence formed for each transmission time interval relating to a transport channel, and for forming a fifth sequence ($g'_i$) of estimates extracted from the permuted fourth sequence ($h'_i$);
- means ($44_i$) for deleting each marked estimate of the fifth sequence formed for each transmission time interval relating to a transport channel, and for forming a sixth sequence of symbols ($c'_i$) on the basis of the other estimates of the fifth sequence; and
- means ($43_i$-$41_i$) for decoding the sixth sequence of estimates which is formed for each transmission time interval relating to a transport channel, to output the decoded estimates ($a'_i$).

**12.** Device according to Claim 11, wherein the means for forming the third sequence of estimates (s') comprise means (50) for concatenating the second sequences ($u'_j$) which are formed for the Y communication channels and means (49) for deleting at least one estimate having a determined position in the concatenated sequence (w').

**13.** Device according to Claim 11, wherein the means for forming the fifth sequence ($g'_i$) comprise means ($45_i$) for deleting at least one estimate having a determined position in the permuted fourth sequence ($h'_i$).

**14.** Radiocommunication terminal, comprising a processing device according to any one of Claims 11 to 13.

**Patentansprüche**

**1.** Verarbeitungsverfahren für X über Y Kommunikationskanäle zu übertragende Informationssymbol-Ströme, wobei

X und Y positive ganze Zahlen sind, wobei die Y Kommunikationskanäle gleichzeitig ein in aufeinanderfolgenden Rastern organisiertes Übertragungsmittel einnehmen, wobei die aufeinanderfolgenden Raster Raster im komprimierten Modus mit mindestens einer inaktiven Periode, während der kein Symbol übertragen wird, aufweisen, wobei die Informationssymbole jedes Stromes i mit $1 \leq i \leq X$ während aufeinanderfolgender Übertragungszeitintervalle übertragen werden, wobei jedes Zeitintervall $F_i$ aufeinanderfolgende Raster umfasst und $F_i$ eine positive ganze Zahl ist und wobei für jedes auf einen Strom i bezogene Übertragungszeitintervall ganze Zahlen $E_i$, $\Delta N_i^{TTI}$ und $\Delta N_i^{cm}$ so definiert werden, dass $E_i > 0$ und $\Delta N_i^{cm} < 0$, wenn das Übertragungszeitintervall mindestens ein Raster im komprimierten Modus umfasst
und dass $\Delta N_i^{cm} = 0$ wenn das Übertragungszeitintervall kein Raster im komprimierten Modus umfasst,
wobei das Verfahren für jedes auf einen Strom i bezogene Übertragungszeitintervall folgende Schritte aufweist:

- Bildung einer ersten Sequenz ($c_i$) von $E_i$ codierten Symbolen aus Informationssymbolen des zum Übertragungszeitintervall gehörenden Stromes;
- Bildung einer zweiten Sequenz von Symbolen ($h_i$), welche aus der ersten Sequenz extrahierte $E_i + \Delta N_i^{TTI} + \Delta N_i^{cm}$ Symbole und $-\Delta N_i^{cm}$ markierte Symbole aufweist;
- Bildung einer dritten Sequenz von Symbolen ($q_i$) durch eine Vertauschung der Symbole der zweiten Sequenz;
- Verteilung der Symbole der dritten Sequenz auf $F_i$ Segmente aufeinanderfolgender Symbole, wobei die $F_i$ Segmente jeweils den Rastern des Übertragungszeitintervalls zugeordnet sind; und
- Bildung einer vierten Sequenz ($f_i$) von aus dem dem besagten Raster zugeordneten Segment extrahierten Symbolen für jedes Raster des Übertragungszeitintervalls,

wobei die Vertauschung und die Platzierung der markierten Symbole in der zweiten Sequenz, wenn das Übertragungszeitintervall mindestens ein Raster im komprimierten Modus aufweist, so sind, dass jedes markierte Symbol in der dritten Sequenz zu einem Segment gehört, welches einem Raster im komprimierten Modus zugeordnet ist, und die folgenden Schritte für jedes Raster aufweist:

- Bildung einer fünften Sequenz von Symbolen (w), welche die für das Raster in Bezug auf jeden Strom ausgegebenen Symbole der vierten Sequenz einschließt;
- Verteilung der Symbole der fünften Sequenz auf Y Segmente von Symbolen, wobei die Y Segmente jeweils den Y Kommunikationskanälen zugeordnet werden;
- Bildung einer sechsten Sequenz von Symbolen ($u_j$) für jeden Kommunikationskanal, welche aus dem dem Kommunikationskanal zugeordneten Segment extrahiert werden;
- Bildung einer siebten Sequenz von Symbolen ($v_i$) für jeden Kommunikationskanal durch eine Vertauschung der Symbole der sechsten Sequenz; und
- Übertragung von aus der siebten Sequenz extrahierten Symbolen auf jeden Kommunikationskanal in Zeitschlitzen des besagten Rasters,

wobei jedes der markierten Symbole vor Übertragung über jeden Kommunikationskanal gelöscht wird, sobald das Raster sich im komprimierten Modus befindet, um die inaktive Periode innerhalb des Rasters vorzusehen.

2. Verfahren nach Anspruch 1, wobei die markierten Symbole bis zu den siebten Sequenzen ($v_j$) aufbewahrt werden, wenn das Raster sich im komprimierten Modus befindet, ohne aus den siebten Sequenzen für die Übertragung extrahiert zu werden.

3. Verfahren nach Anspruch 1 oder 2, wobei in die zweite oder die fünfte Sequenz ($h_i$, w) zusätzlich markierte Symbole einfügt werden, wobei diese Symbole bis zu den siebten Sequenzen ($v_j$) aufbewahrt werden, um mit einer Nullsendeleistung übertragen zu werden,

4. Verarbeitungsvorrichtung für X über Y Kommunikationskanäle zu übertragende Informationssymbol-Strome, wobei X und Y positive ganze Zahlen sind, wobei die Y Kommunikationskanäle gleichzeitig ein in aufeinanderfolgenden Rastern organisiertes Übertragungsmittel einnehmen, wobei die aufeinanderfolgenden Raster Raster im komprimierten Modus mit mindestens einer inaktiven Periode, während der kein Symbol übertragen wird, aufweisen, wobei die Informationssymbole jedes Stromes i mit $1 \leq i \leq X$ in aufeinanderfolgenden Übertragungszeitintervallen übertragen werden, wobei jedes Zeitintervall $F_I$ aufeinanderfolgende Raster enthält und $F_i$ eine positive ganze Zahl ist, wobei für jedes Übertragungszeitintervall bezogen auf einen Strom i ganze Zahlen $E_i$, $\Delta N_i^{TTI}$ und $\Delta N_i^{cm}$-definiert. werden mit $E_I > 0$ und $\Delta N_i^{cm} < 0$, wenn das Übertragungszeitintervall mindestens ein Raster im komprimierten Modus umfasst und $\Delta N_i^{cm} = 0$, wenn das Übertragungszeitintervall kein Raster im komprimierten Modus umfasst,

wobei die Vorrichtung umfasst:

- Mittel ($21_i$-$23_i$) zur Bildung einer ersten Sequenz ($c_i$) von $E_i$ codierten Symbolen auf der Basis von Informationssymbolen eines jeden zu einem Übertragungszeitintervall gehörenden Stromes i;
- Mittel ($24_i$-$25_i$) zur Bildung einer zweiten Sequenz von Symbolen ($h_i$) für jedes auf einen Strom i bezogene Übertragungszeitintervall, welche aus der ersten Sequenz extrahierte $E_i + \Delta N_i^{TTI} + \Delta N_i^{cm}$ Symbole und - $\Delta Ni^{cm}$ markierte Symbole enthalten;
- Mittel ($26_i$) zur Bildung einer dritten Sequenz von Symbolen ($q_i$) durch eine erste Vertauschung der Symbole jeder zweiten Sequenz;
- Mittel ($27_i$) zur Verteilung der Symbole jeder dritten Sequenz, welche für ein auf einen Strom i bezogenes Übertragungszeitintervall gebildet wird, auf jeweils den Rastern des Übertragungszeitintervalls zugeordnete $F_I$ Segmente von aufeinanderfolgenden Symbolen und zur Bildung von $F_i$ vierten Sequenzen ($f_i$) von jeweils aus den den Rastern zugeordneten Segmenten von extrahierten Symbolen;
- Mittel (28-29) zur Bildung einer fünften Sequenz von Symbolen (w) für jedes Raster, welche die Symbole der vierten Sequenz einschliesst, die für das auf jeden Strom i bezogene Raster ausgegeben werden;
- Mittel (30) zur Verteilung der Symbole jeder fünften Sequenz auf Y Symbolsegmente, die jeweils den Y Kommunikationskanälen zugeordnet sind;
- Mittel ($31_j$) zur Bildung einer sechsten Sequenz ($u_j$) von aus dem jedem Kommunikationskanal zugeordneten Segment extrahierten Symbolen; und
- Mittel ($32_j$) zur Bildung einer siebten Sequenz von Symbolen ($v_j$) durch eine zweite Vertauschung von Symbolen jeder sechsten Sequenz und zur Übertragung, in Zeitschlitzen jedes Rasters, auf jeden Kommunikationskanal von aus der siebten Sequenz extrahierten Symbolen,

wobei die erste Vertauschung und die Platzierung von markierten Symbolen in der zweiten Sequenz, welche für einen auf einen Strom bezogenen Übertragungszeitraum gebildet wird, wenn der Übertragungszeitraum mindestens ein Raster im komprimierten Modus aufweist, so sind, dass jedes markierte Symbol, welches in der dritten Sequenz für das Übertragungszeitintervall gebildet wird, zu einem Segment gehört, welches einem Raster im komprimierten Modus zugeordnet ist, wobei jedes der markierten Symbole vor Übertragung auf jeden Kommunikationskanal gelöscht wird, um die inaktive Periode in dem Rasters vorzusehen.

**5.** Vorrichtung nach Anspruch 4, wobei die Mittel ($26_i$ - $32_j$) zur Bildung der dritten, vierten, fünften, sechsten und siebten Symbolsequenzen ($q_i$, $f_i$, w, $u_j$, $v_j$) so angeordnet sind, dass die markierten Symbole bis zu den siebten Sequenzen ($v_j$) gehalten werden, welche für jedes Raster in komprimiertem Modus gebildet werden, wobei die markierten Symbole nicht aus den siebten Sequenzen für die Übertragung extrahiert werden.

**6.** Vorrichtung nach Anspruch 4 oder 5, umfassend Mittel ($25_i$, 29) zum Einfügen in die zweite oder fünfte Sequenz ($h_i$, w) von zusätzlichen markierten Symbolen, die bis zu den siebten Sequenzen ($v_j$) gehalten werden, um mit einer Nullsendeleistung übertragen zu werden,

**7.** Funkbasisstation, weiche eine Verarbeitungsvorrichtung nach einem der Ansprüche 4 bis 6 umfasst.

**8.** Verarbeitungsverfahren für Y numerische Ströme ($r'_j$), welche aus einem empfangenen Signal erhalten werden und welches Schätzungen von Informationssymbolen umfasst, die jeweils über Y Kommunikationskanäle übertragen werden, wobei die Kommunikationskanäle gleichzeitig ein in aufeinanderfolgenden Rastern organisiertes Übertragungsmittel einnehmen, und auf X Transportkanäle bezogen sind, wobei X und Y positive ganze Zahlen sind, wobei die aufeinanderfolgenden Raster Raster im komprimierten Modus mit jeweils mindestens einer inaktiven Periode, während der kein Symbol übertragen wird, aufweisen, wobei die auf jeden Transportkanal i mit $1 \leq i \leq X$ bezogenen Abschätzungen von Informationssymbolen während aufeinanderfolgenden Übertragungszeitintervallen empfangen werden, wobei jedes Zeitintervall $F_i$ aufeinanderfolgende Raster enthält, und wobei $F_i$ eine positive ganze Zahl ist, wobei das Verfahren für jedes Raster folgende Schritte aufweist:

- Bildung, bezogen auf jeden Kommunikationskanal j mit $1 \leq j \leq Y$, einer ersten Sequenz ($v'_j$), welche zusammengesetzt ist aus Schätzungen, die aus den Zeitschlitzen des Rasters extrahiert werden und, wenn das besagte Raster sich im komprimierten Modus befindet, aus an Positionen, die der inaktiven Periode des besagten Rasters entsprechen, platziarten markierten Schätzungen;
- Bildung einer zweiten Sequenz von Schätzungen ($u'_j$) für jeden Kommunikationskanal durch eine Vertauschung der Schätzungen der ersten Sequenz ;
- Bildung einer dritten Sequenz von Schätzungen (s'), welche Schätzungen der zweiten Sequenz einschliesst,

welche für jeden Kommunikationskanal ausgegeben werden, und
- Verteilung der Schätzungen der dritten Sequenz auf X Segmente ($f'_i$) von aufeinanderfolgenden Schätzungen , wobei die X Segmente jeweils den X Transportkanälen zugeordnet sind;

und die folgenden Schritte für jedes Übertragungszeitintervall bezogen auf einen Transportkanal:

- Bildung einer vierten Sequenz ($q'_i$) durch Verkettung der jeweiligen Segmente ($f'_j$), welche dem Transportkanal für die Raster des Übertragungszeitintervalls zugeordnet sind ;
- Vertauschen der Schätzungen der vierten Sequenz und Bildung einer fünften Sequenz ($g'_i$) von Schätzungen, die aus der vertauschten vierten Sequenz ($h'_i$) extrahiert sind;
- Ignorierung jeder markierten Schätzung der fünften Sequenz und Bildung einer sechsten Sequenz von Symbolen ($c'_i$) auf der Basis der anderen Schätzungen der fünften Sequenz; und
- Decodierung der sechsten Sequenz von Schätzungen und Ausgeben der decodierten Schätzungen ($a'_l$).

**9.** Verfahren nach Anspruch 8, wobei die Bildung der dritten Sequenz (s') für mindestens ein Raster eine Verkettung der zweiten Sequenzen ($u'_j$) umfasst, welche für die Y Kommunikationskanäle gebildet sind, und eine Löschung mindestens einer Schätzung, welche eine vorbestimmte Position in der verketteten Sequenz (w') hat.

**10.** Verfahren nach Anspruch 8, wobei der Schritt der Bildung der fünften Sequenz ($g'_i$) für mindestens ein auf einen Transportkanal bezogenes Übertragungszeitinterval eine Löschung von mindestens einer Schätzung enthält, die eine vorbestimmte Position in der vertauschten vierten Sequenz ($h'_l$) aufweist.

**11.** Verarbeitungsvorrichtung für Y numerische Ströme ($r'_j$), welche aus einem empfangenen Signal erhalten werden, und welche Schätzungen von Informationssymbolen umfasst, die jeweils über Y Kommunikationskanäle übertragen werden, wobei die Y Kommunikationskanäle gleichzeitig ein in aufeinanderfolgenden Rastern organisiertes Übertragungsmittel einnehmen, und auf X Transportkanäle bezogen sind, mit X und Y als positive ganze Zahlen, wobei die aufeinanderfolgenden Raster Raster im komprimierten Modus mit mindestens einer inaktiven Periode, während der kein Symbol übertragen wird, aufweisen, wobei die auf jeden Transportkanal i mit $1 \leq i \leq X$ bezogenen Schätzungen der Informationssymbole während aufeinanderfolgender Übertragungszeitintervalle empfangen werden, wobei jedes Zeitintervall $F_i$ aufeinanderfolgende Raster enthält, wobei $F_i$ eine positive ganze Zahl ist, wobei die Vorrichtung umfasst:

- Mittel ($52_j$) zur Bildung einer ersten Sequenz ($v'_j$), für jedes auf jeden Kommunikationskanal bezogenes Raster, weiche zusammengesetzt ist aus aus Zeitschlitzen des Rasters extrahierten Schätzungen und, wenn das Raster sich im komprimierten Modus befindet, aus markierten Schätzungen, die in der inaktiven Periode des Rasters entsprechenden Positionen platziert werden;
- Mittel ($51_j$) zur Bildung einer zweiten Sequenz von Schätzungen ($u'_i$), für jedes auf jeden Kommunikationskanal bezogene Raster, durch eine Vertauschung der Schätzungen der ersten Sequenz;
- Mittel (50, 49) zur Bildung, für jedes Raster, einer dritten Sequenz von Schätzungen (s'), welche Schätzungen der für jeden Kommunikationskanal ausgegebenen zweiten Sequenz enthält;
- Mittel (48) zur Verteilung der Schätzungen der dritten Sequenz, welche für jedes Raster gebildet worden ist, auf X Segmente ($f'_j$) aufeinanderfolgender Schätzungen, wobei die X Segmente jeweils den X Transportkanälen zugeordnet sind;
- Mittel ($47_i$) zur Bildung einer vierten Sequenz ($q'_i$) für jedes Übertragungszeitintervall, welches auf einen Transportkanal bezogen ist, durch Verkettung der jeweiligen Segmente ($f'_1$), die dem Transportkanal für die Raster des Übertragungszeitintervalls zugeordnet sind;
- Mittel ($46_i$, $45_i$) zur Vertauschung der Schätzungen der vierten Sequenz, welche für jedes auf einen Transportkanal bezogenes Übertragungszeitintervall gebildet ist und zur Bildung einer fünften Sequenz ($g'_i$) von Schätzungen, die aus der vertauschten vierten Sequenz ($h'_i$) extrahiert sind;
- Mittel ($44_i$) zur Löschung jeder markierten Schätzung der fünften Sequenz, welche für jedes auf einen Transportkanal bezogenes Übertragungszeitintervall gebildet ist, und zur Bildung einer sechsten Symbolsequenz, ($c'_i$) auf der Basis der anderen Schätzungen der fünften Sequenz; und
- Mittel ($43_i$ - $41_i$) zur Decodierung der sechsten Sequenz von Schätzungen, welche für jedes auf einen Transportkanal bezogenes Übertragungszeitintervall gebildet ist, um die entschlüsselten Schätzungen ($a'_i$) auszugeben.

**12.** Vorrichtung nach Anspruch 11, wobei die Mittel zur Bildung der dritten Sequenz von Schätzungen (s') Mittel (50) zur Verkettung der zweiten Sequenzen ($u'_j$), welche für die Y Kommunikationskanäle gebildet sind, und Mittel (49)

zur Löschung von mindestens einer eine bestimmte Position in der verketteten Sequenz (w') aufweisenden Schätzung umfassen.

**13.** Verrichtung nach Anspruch 11, wobei die Mittel zur Bildung der fünften Sequenz ($g'_1$) Mittel ($45_i$) zur Löschung von mindestens einer eine bestimmte Position in der vertauschten vierten Sequenz ($h'_i$) aufweisende Schätzung umfassen.

**14.** Funkterminal, welches eine Verarbeitungsvorrichtung nach einem der Ansprüche 11 bis 13 umfasst.

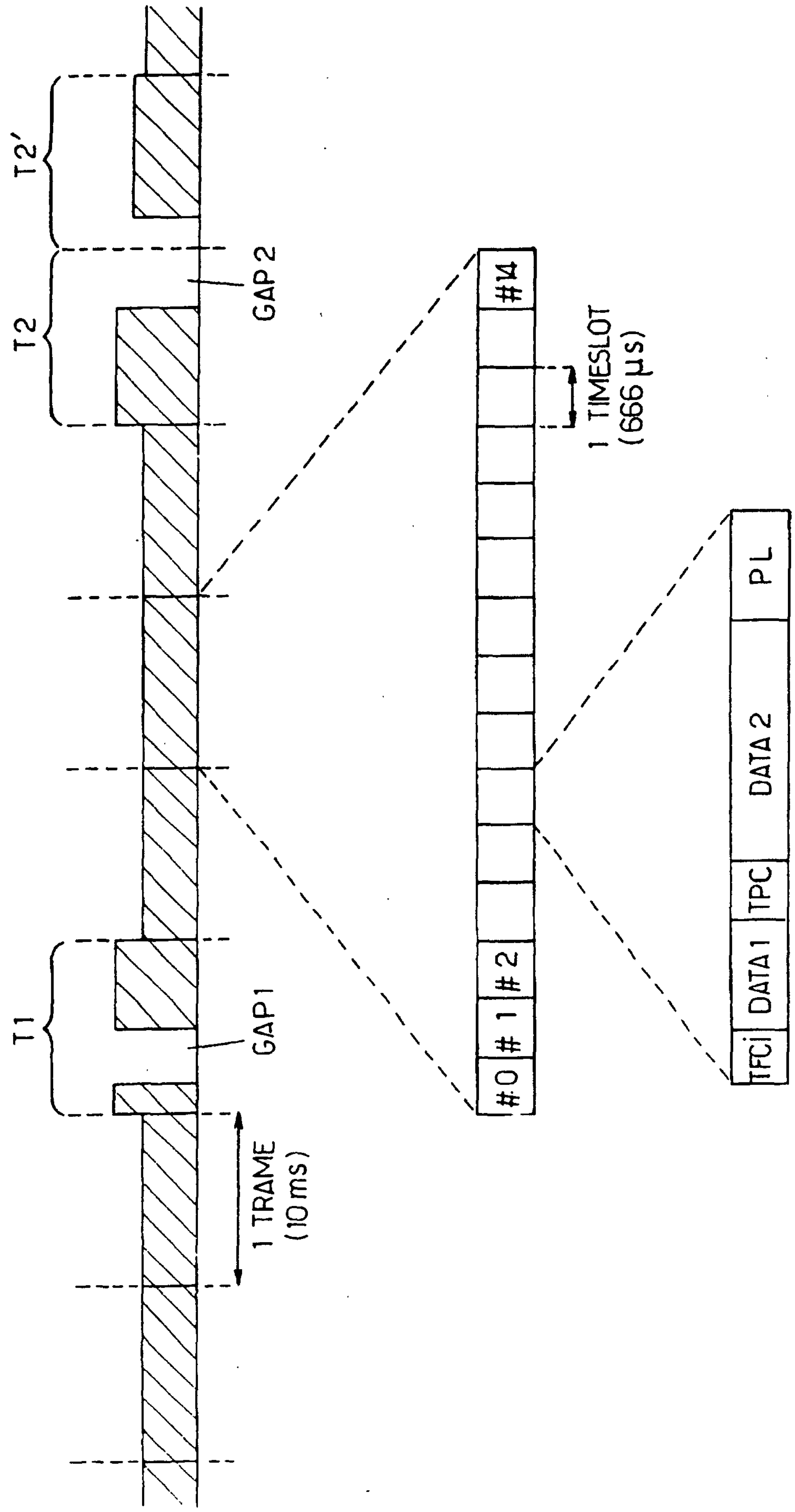
T2'
T2
GAP 2
T1
GAP 1
1 TRAME
(10 ms)
#14
1 TIMESLOT
(666 µs)
#0
# 1
# 2
PL
DATA 2
TPC
DATA 1
TFCi

FIG.1.

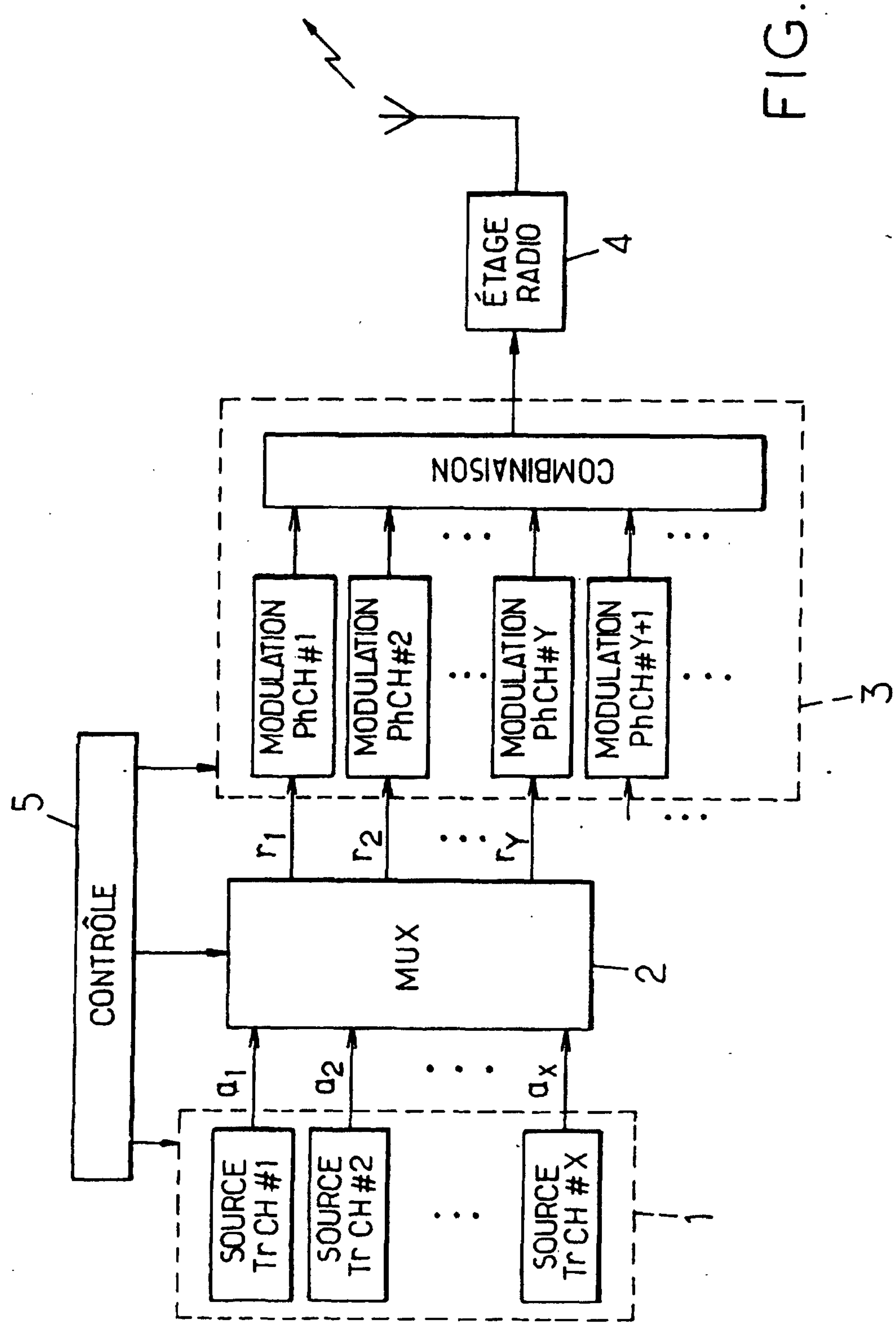
SOURCE TrCH #1
SOURCE TrCH #2
SOURCE TrCH #X
1
a1
a2
ax
CONTRÔLE
5
MUX
2
r1
r2
rY
MODULATION PhCH#1
MODULATION PhCH#2
MODULATION PhCH#Y
MODULATION PhCH#Y+1
3
COMBINAISON
ÉTAGE RADIO
4

FIG.2.

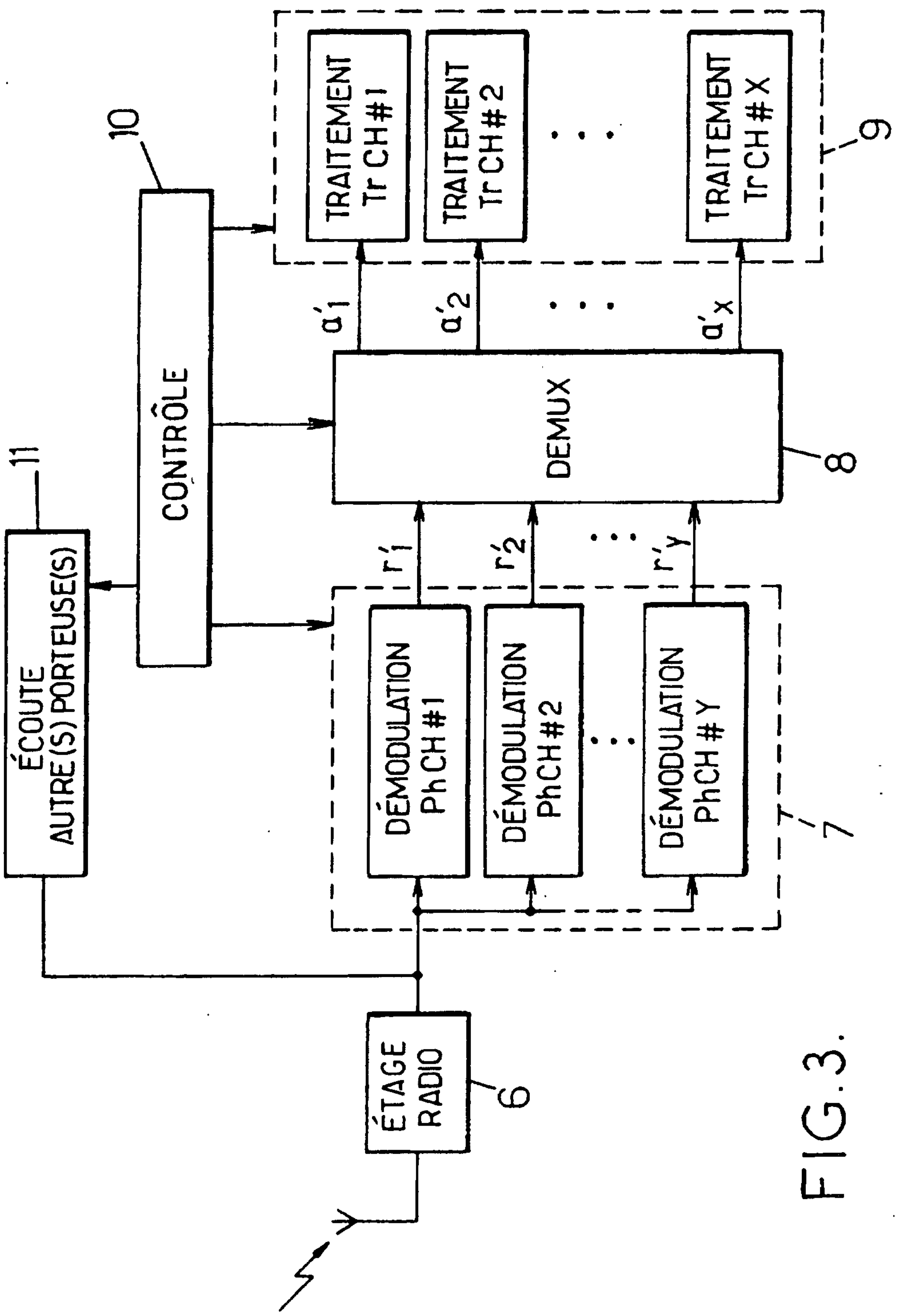
ÉTAGE RADIO
6
ÉCOUTE AUTRE(S) PORTEUSE(S)
11
CONTRÔLE
10
DÉMODULATION PhCH #1
DÉMODULATION PhCH #2
DÉMODULATION PhCH # Y
7
r'1
r'2
r'Y
DEMUX
8
a'1
a'2
a'X
TRAITEMENT TrCH #1
TRAITEMENT TrCH # 2
TRAITEMENT TrCH # X
9

FIG.3.

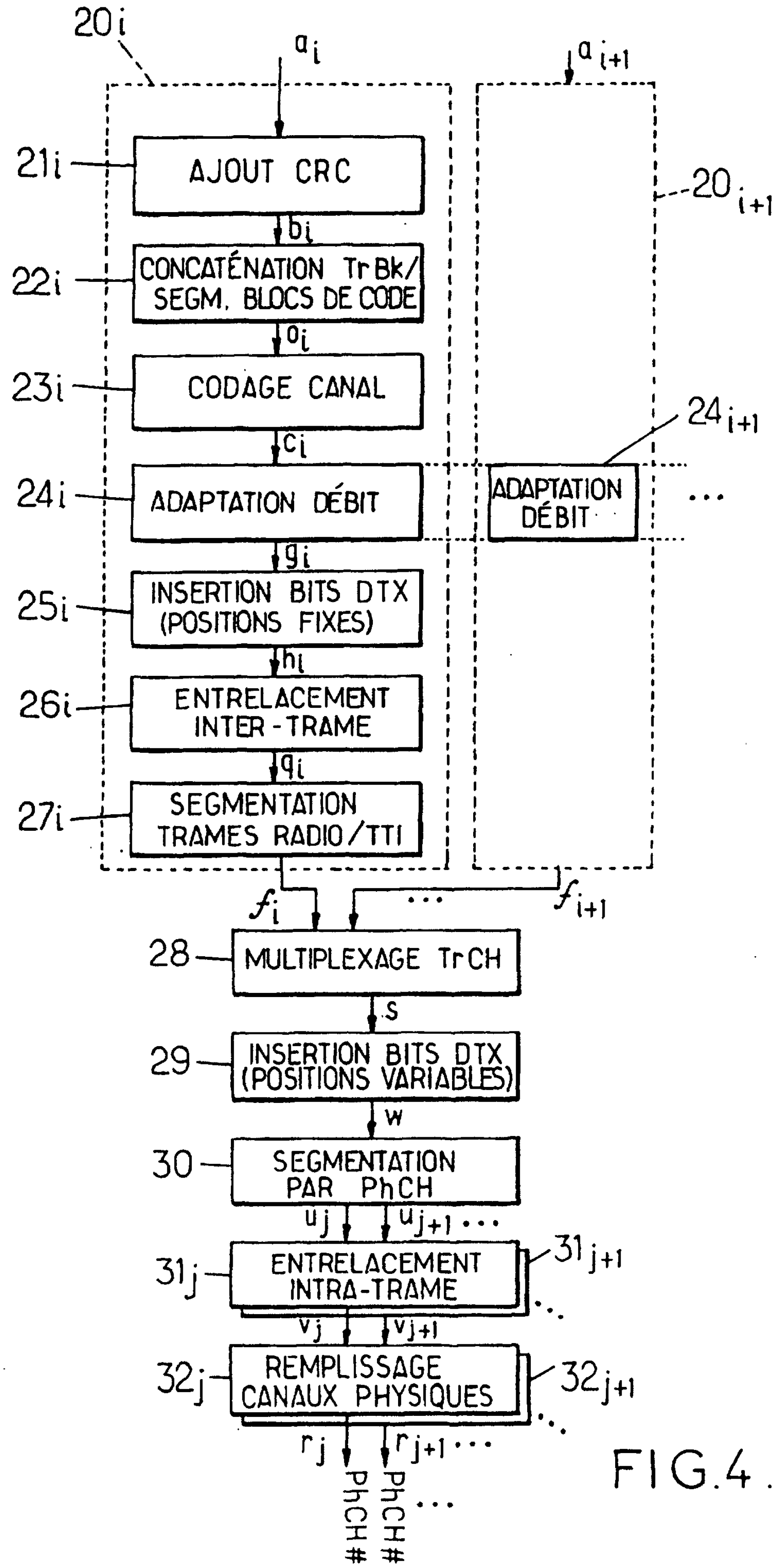

20i
$a_i$
$a_{i+1}$
21i
AJOUT CRC
$b_i$
22i
CONCATÉNATION TrBk/
SEGM. BLOCS DE CODE
$o_i$
23i
CODAGE CANAL
$c_i$
24i
ADAPTATION DÉBIT
$g_i$
25i
INSERTION BITS DTX
(POSITIONS FIXES)
$h_i$
26i
ENTRELACEMENT
INTER-TRAME
$q_i$
27i
SEGMENTATION
TRAMES RADIO/TTI
$20_{i+1}$
$24_{i+1}$
ADAPTATION
DÉBIT
...
$f_i$
...
$f_{i+1}$
28
MULTIPLEXAGE TrCH
s
29
INSERTION BITS DTX
(POSITIONS VARIABLES)
w
30
SEGMENTATION
PAR PhCH
$u_j$
$u_{j+1}$ ...
$31_j$
ENTRELACEMENT
INTRA-TRAME
$31_{j+1}$
$v_j$
$v_{j+1}$
$32_j$
REMPLISSAGE
CANAUX PHYSIQUES
$32_{j+1}$
$r_j$
$r_{j+1}$ ...
PhCH#
PhCH#
...


FIG.4.

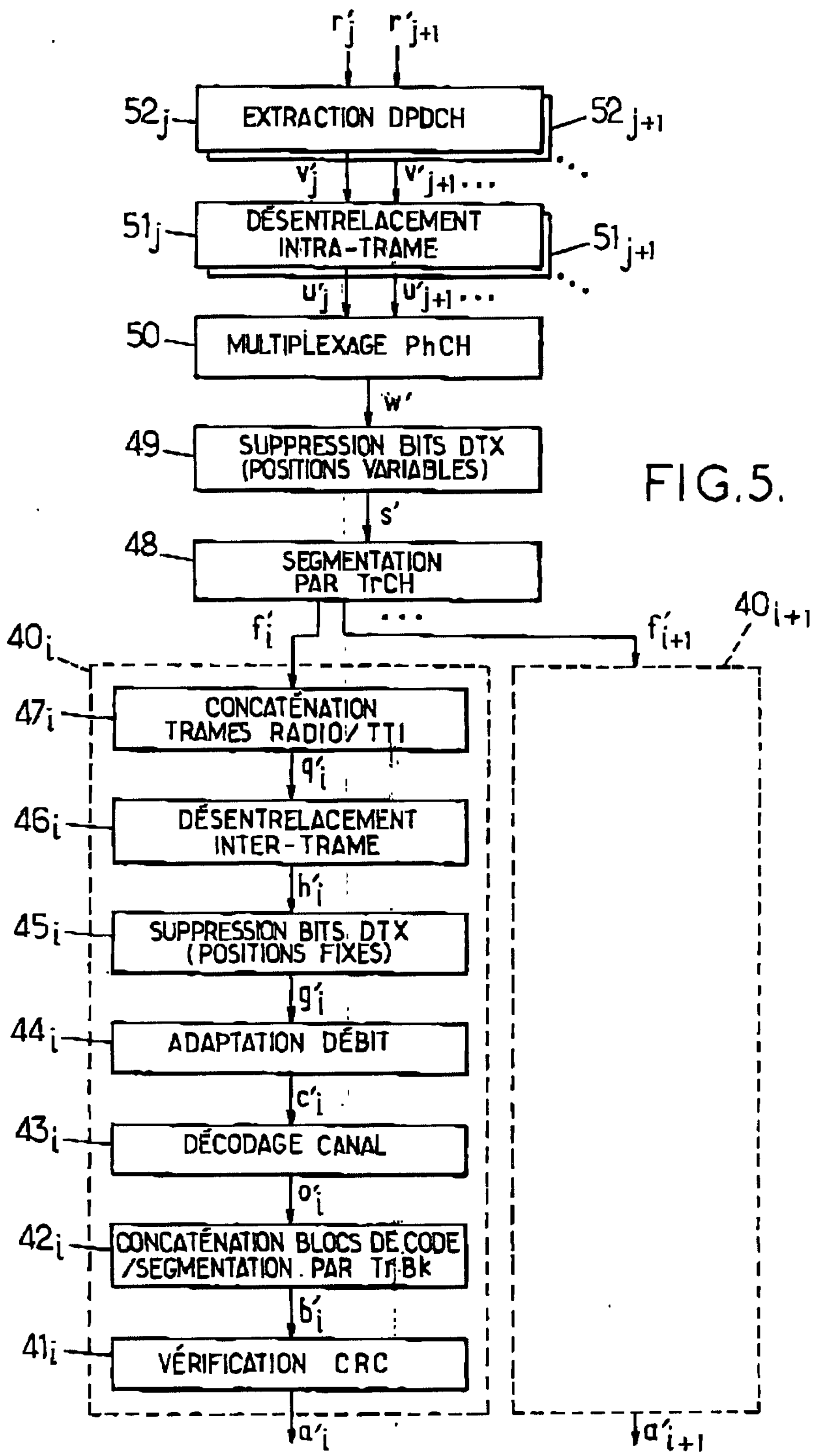
r'j
r'j+1
52j
EXTRACTION DPDCH
52j+1
v'j
v'j+1 ...
51j
DÉSENTRELACEMENT
INTRA-TRAME
51j+1
u'j
u'j+1 ...
50
MULTIPLEXAGE PhCH
w'
49
SUPPRESSION BITS DTX
(POSITIONS VARIABLES)
s'
48
SEGMENTATION
PAR TrCH
f'i
...
f'i+1
40i
40i+1
47i
CONCATÉNATION
TRAMES RADIO/TTI
q'i
46i
DÉSENTRELACEMENT
INTER-TRAME
h'i
45i
SUPPRESSION BITS DTX
(POSITIONS FIXES)
g'i
44i
ADAPTATION DÉBIT
c'i
43i
DÉCODAGE CANAL
o'i
42i
CONCATÉNATION BLOCS DE CODE
/SEGMENTATION PAR TrBk
b'i
41i
VÉRIFICATION CRC
a'i
a'i+1

FIG.5.

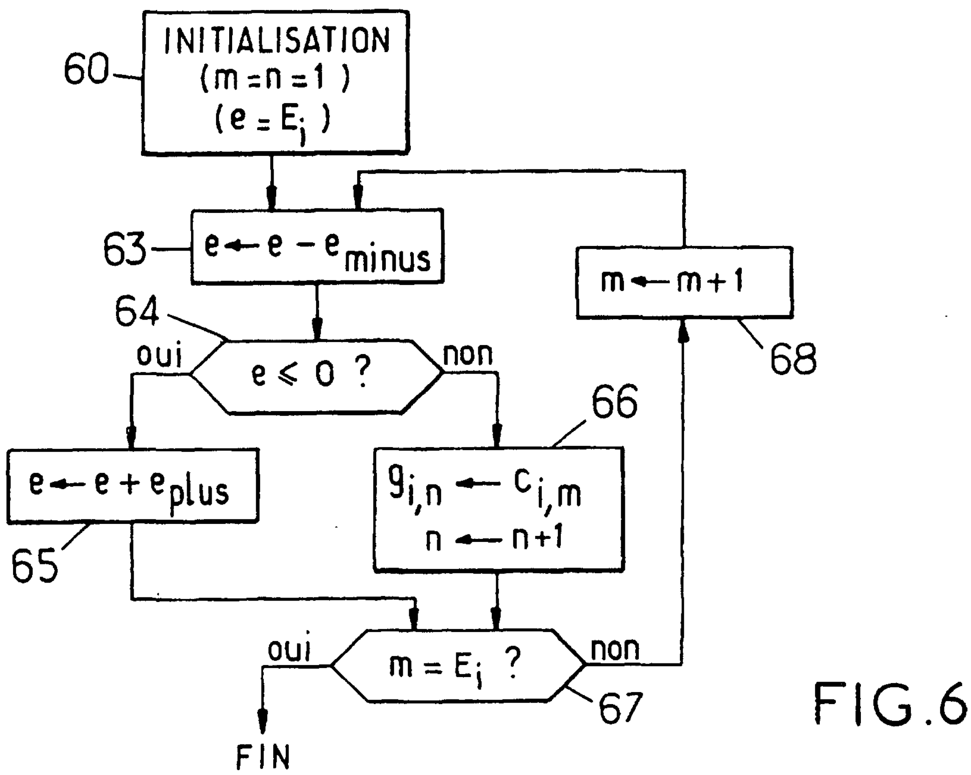
INITIALISATION
(m = n = 1)
(e = Ei)
60
e ← e − eminus
63
64
oui
e ⩽ 0 ?
non
e ← e + eplus
65
gi,n ← ci,m
n ← n+1
66
m ← m+1
68
oui
m = Ei ?
non
67
FIN

FIG. 6

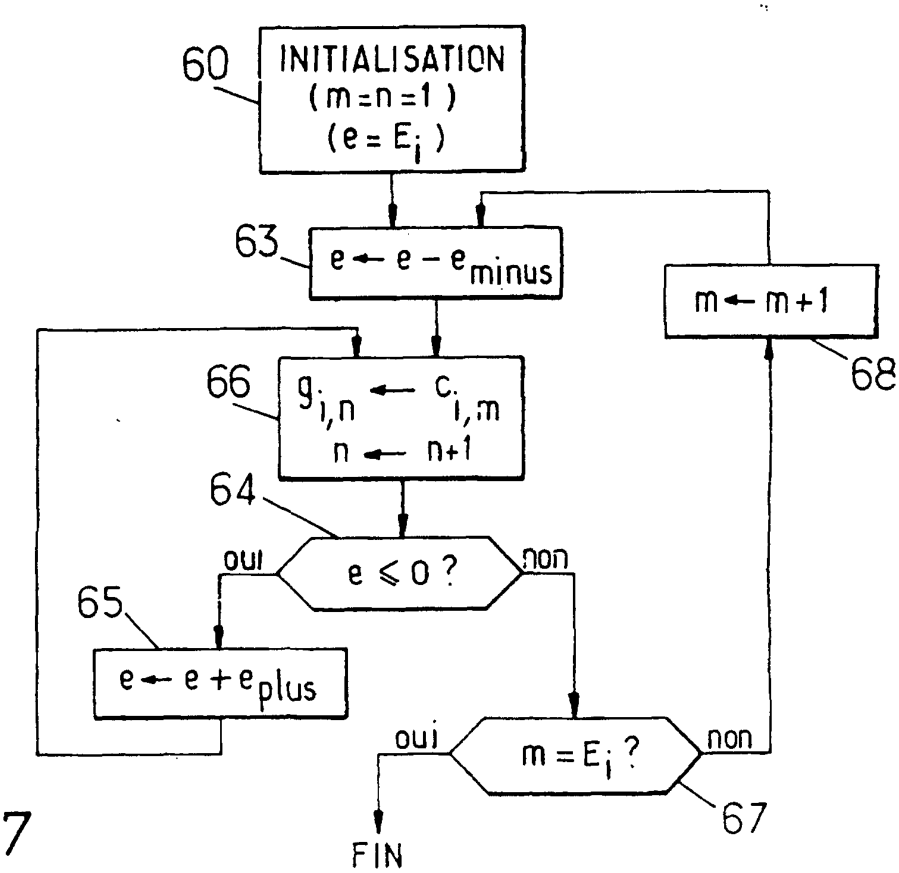
INITIALISATION
(m = n = 1)
(e = Ei)
60
e ← e − eminus
63
m ← m+1
68
gi,n ← ci,m
n ← n+1
66
64
oui
e ⩽ 0 ?
non
65
e ← e + eplus
oui
m = Ei ?
non
67
FIN

FIG. 7

FIG.8

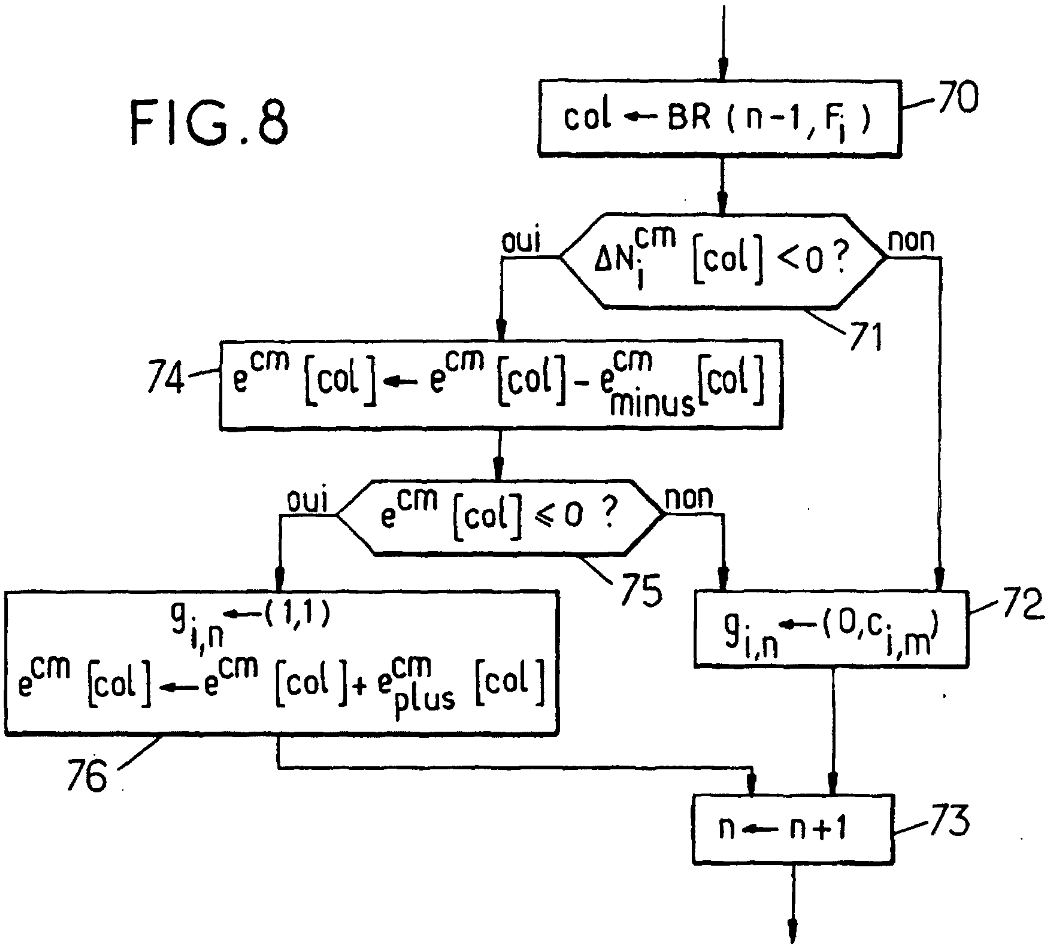
col ← BR (n-1, $F_i$)
70
$\Delta N_i^{cm}$ [col] < 0 ?
oui
non
71
$e^{cm}$ [col] ← $e^{cm}$ [col] - $e^{cm}_{minus}$ [col]
74
$e^{cm}$ [col] ≤ 0 ?
oui
non
75
$g_{i,n}$ ← (1,1)
$e^{cm}$ [col] ← $e^{cm}$ [col] + $e^{cm}_{plus}$ [col]
76
$g_{i,n}$ ← (0,$c_{i,m}$)
72
n ← n+1
73

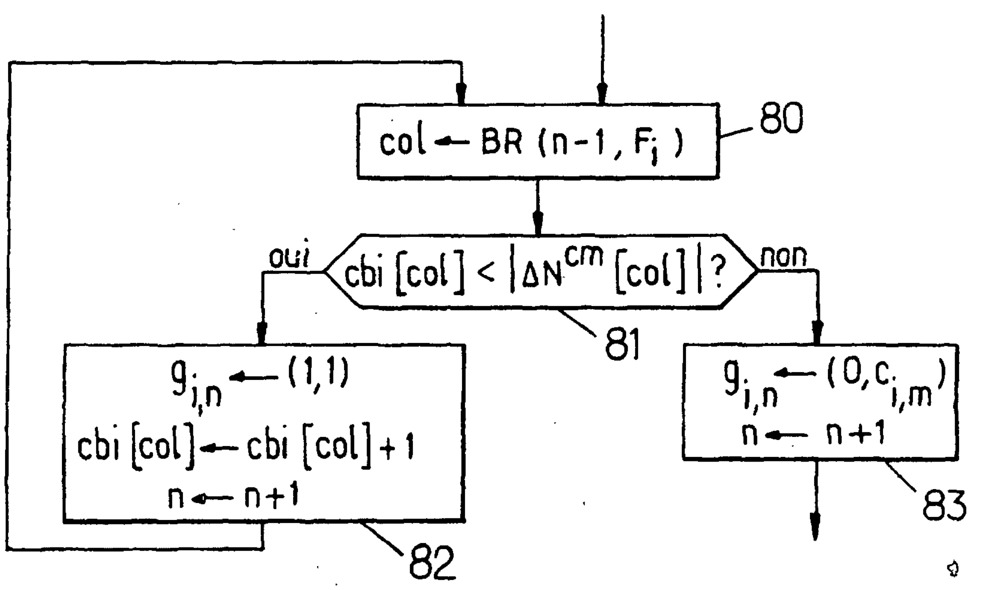
col ← BR (n-1, $F_i$)
80
cbi [col] < |$\Delta N^{cm}$ [col]| ?
oui
non
81
$g_{i,n}$ ← (1,1)
cbi [col] ← cbi [col] + 1
n ← n+1
82
$g_{i,n}$ ← (0,$c_{i,m}$)
n ← n+1
83

FIG.9

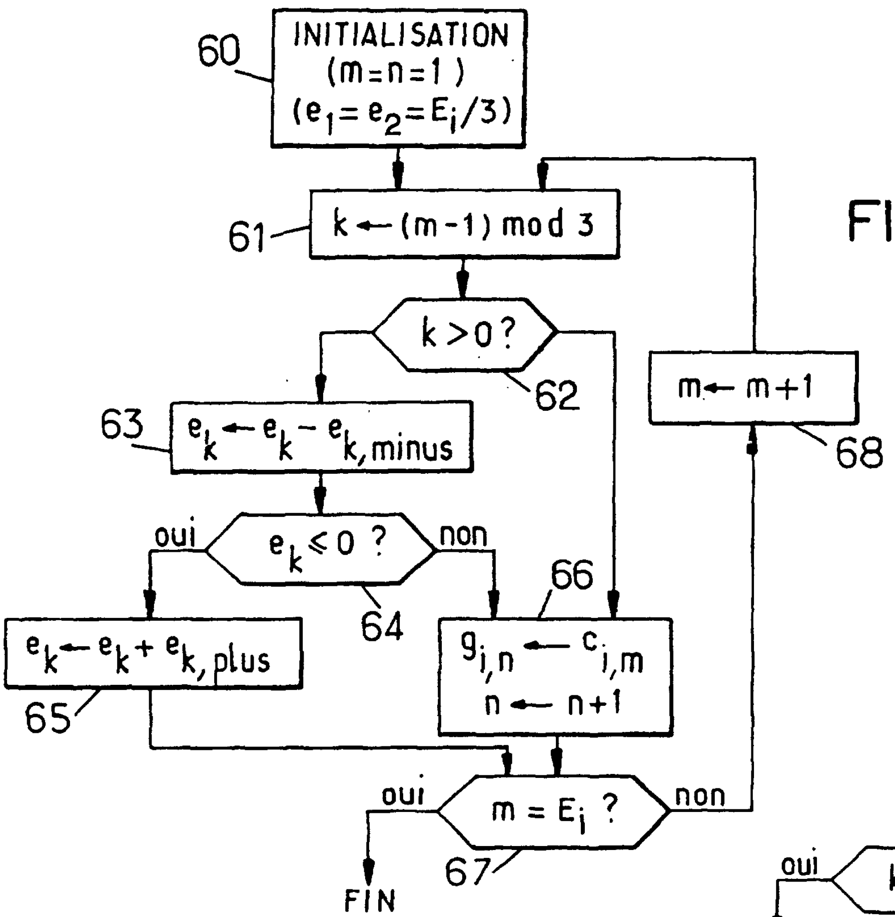
INITIALISATION
(m=n=1)
($e_1=e_2=E_i/3$)
60
$k \leftarrow (m-1) \bmod 3$
61
k>0?
62
$e_k \leftarrow e_k - e_{k,minus}$
63
$e_k \leqslant 0$ ?
oui
non
64
$e_k \leftarrow e_k + e_{k,plus}$
65
$g_{i,n} \leftarrow c_{i,m}$
$n \leftarrow n+1$
66
$m = E_i$ ?
oui
non
67
FIN
$m \leftarrow m+1$
68

FIG.10

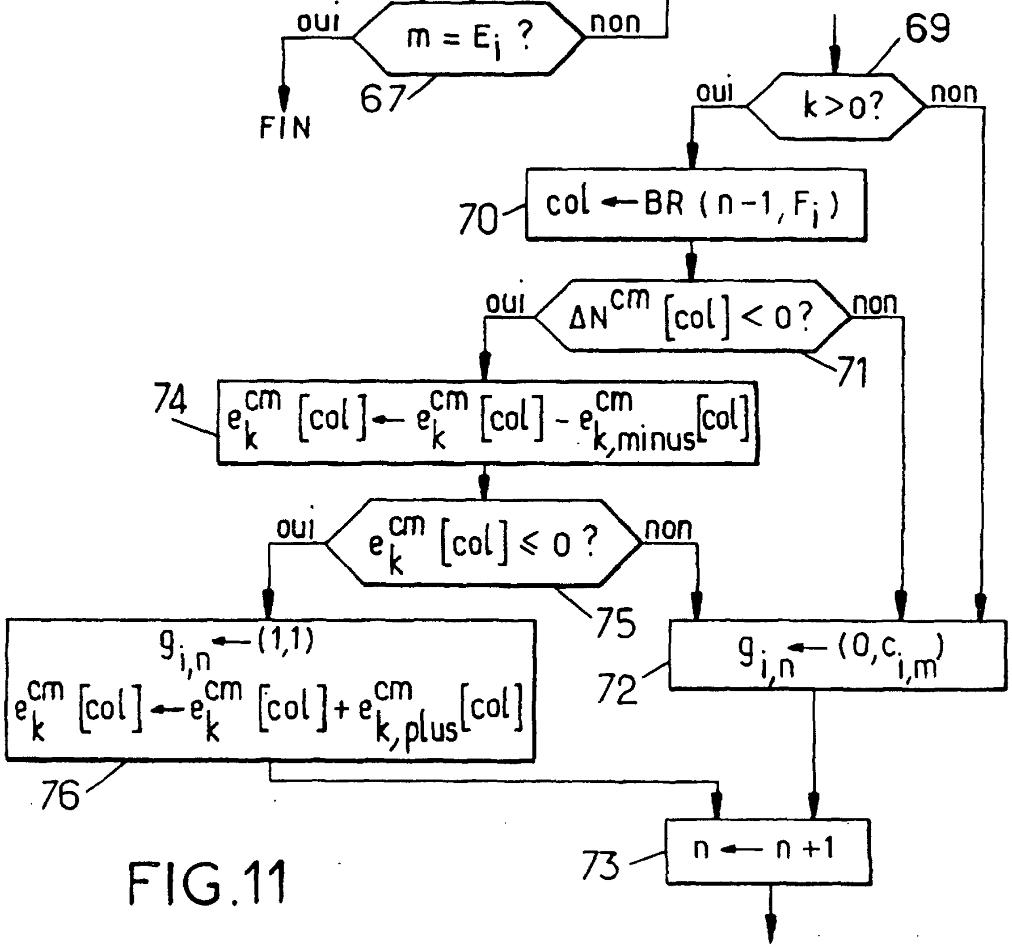
69
k>0?
oui
non
$col \leftarrow BR(n-1, F_i)$
70
$\Delta N^{cm}[col] < 0$?
oui
non
71
$e_k^{cm}[col] \leftarrow e_k^{cm}[col] - e_{k,minus}^{cm}[col]$
74
$e_k^{cm}[col] \leqslant 0$ ?
oui
non
75
$g_{i,n} \leftarrow (1,1)$
$e_k^{cm}[col] \leftarrow e_k^{cm}[col] + e_{k,plus}^{cm}[col]$
76
$g_{i,n} \leftarrow (0, c_{i,m})$
72
$n \leftarrow n+1$
73

FIG.11